# EUROPÄISCHE PATENTSCHRIFT

(11) **EP 2 703 915 B1**
(45) Veröffentlichungstag und Bekanntmachung des Hinweises auf die Patenterteilung: **15.05.2019**
(21) Anmeldenummer: 13003023.2
(22) Anmeldetag: 13.06.2013
(51) Int. Cl.: G05B 13/02

(54) **Verfahren und System zur Fuzzy-basierten Regelung des Gesamtenergieverbrauchs mehrerer elektrischer Geräte**
Method and system for fuzzy logic based control of the total energy consumption of several electrical apparatuses
Procédé et dispositif de commande de la consommation totale d'énergie de plusiers apparells électriques basé sur la logique floue

(30) Priorität: 28.08.2012 DE 102012016967
(43) Veröffentlichungstag der Anmeldung: 05.03.2014
(73) Patentinhaber: Deutsche Telekom AG, 53113 Bonn (DE)
(72) Erfinder: Wieland, Sabine, 04420 Markranstädt (DE)
(74) Vertreter: Bill, Burkart Hartmut

(56) Entgegenhaltungen:
- WO-A1-01/01542
- LAGHARI J A ET AL: "An intelligent under frequency load shedding scheme for islanded distribution network", POWER ENGINEERING AND OPTIMIZATION CONFERENCE (PEOCO), 2012 IEEE INTERNATIONAL, IEEE, 6. Juni 2012 (2012-06-06), Seiten 40-45, XP032453158, DOI: 10.1109/PEOCO.2012.6230832 ISBN: 978-1-4673-0660-7
- VITO CALDERARO ET AL: "Fuzzy load-shedding strategy in distribution systems", INTELLIGENT SYSTEMS DESIGN AND APPLICATIONS (ISDA), 2011 11TH INTERNATIONAL CONFERENCE ON, IEEE, 22. November 2011 (2011-11-22), Seiten 319-324, XP032086074, DOI: 10.1109/ISDA.2011.6121675 ISBN: 978-1-4577-1676-8

## Beschreibung

Die Erfindung betrifft ein System zur Fuzzy-basierten Regelung des gesamten Energieverbrauchs mehrerer elektrischer Geräte, insbesondere ein Fuzzy-Regelsystem sowie ein Verfahren zur Fuzzy-basierten Regelung des Gesamtenergieverbrauchs mehrerer elektrischer Geräte, wobei diese elektrischen Geräte eine Gruppe bilden.

Als Stand der Technik sind selbstorganisierende Regler (SOC) bekannt. Beim selbstorganisierenden Regler (Self Organisation Controller - SOC) wird eine initiale Menge von Regeln mit einem festen Performancemaß modifiziert. Das Performancemaß bestimmt die Abweichung zwischen Prozessein- und -ausgabe. Die mit dem Performancemaß ermittelten Ausgabeabweichungen müssen in Eingabekorrekturen umgesetzt werden. Bei der Regelmodifikation wird die Abweichung von der gewünschten Ausgabe ermittelt, indem die Reglerausgabe mit dem Performancemaß verglichen wird. Die für die Abweichung verantwortliche Regel wird ermittelt und entsprechend modifiziert. Alle anderen Regeln müssen an die Veränderung angepasst werden. Dies hat die Nachteile, dass bei einer Regelmodifikation die gesamte Regelbasis verändert wird. Wird die Modifikation wiederholt durchgeführt, kann die Regelbasis in einen früheren Zustand zurückkehren. Der Regler schwingt um einen Idealwert. Damit erfolgt sehr häufig eine Modifikation des Reglers mit geringem Optiemierungspotential. WO01/01542 beschreibt ein System zur Fuzzy-Basierten Regelung eines Systems.

Aufgabe der Erfindung ist es, ein System und ein Verfahren aufzuzeigen, welche eine automatische, adaptive Regelung des Energieverbrauchs mehrerer elektrischer Geräte auf der Grundlage momentaner Energieverbrauchswerte auch bei sich ändernden Zielfunktionen ermöglicht.

Zur Lösung der Aufgabe schlägt die Erfindung ein Verfahren zur Fuzzy-basierten Regelung des Gesamtenergieverbrauchs mehrerer elektrischer Geräte, die eine Gruppe bilden, vor, bei welchem der aktuelle Energieverbrauch eines jeden elektrischen Geräts der Gruppe gemessen wird, für jedes elektrische Gerät in Abhängigkeit von dessen aktuellen Energieverbrauch ein Prioritätswert ermittelt wird, wenigstens das elektrische Gerät mit dem höchsten Prioritätswert ausgewählt wird, und ein Stellwert für das ausgewählte elektrische Gerät in Abhängigkeit von dem dazu gehörenden Prioritätswert, von dessen aktuellen Energieverbrauch und dem aktuellen Gesamtenergieverbrauch der Gruppe derart ermittelt wird, dass der Gesamtenergieverbrauch der Gruppe einen einstellbaren Schwellwert nicht überschreitet.

Die erfindungsgemäß vorgeschlagene Fuzzy-basierte Regelung, welche also Ein-und Ausgangswerte mit linguistischen, jeweils Fuzzy-Sets enthaltenden Variablen beschreibt, ermöglicht somit eine Verknüpfung der Variablen derart, dass hierdurch eine automatische Optimierung des Energieverbrauchs von mehreren, eine Gruppe bildenden elektrischen Geräte auch bei verschiedenen, konkurrierenden Parametern, sich ändernden Zielfunktionen und unter Berücksichtigung verschiedener Kommunikationsprotokolle zur Kommunikation mit den elektrischen Geräten vorgenommen werden kann.

Ein wesentlicher Vorteil ist folglich, dass die Ermittlung eines Stellwertes zur Steuerung des Energieverbrauchs eines ausgewählten elektrischen Gerätes, welcher beispielsweise einen Zeitpunkt des Einschaltens oder des Taktens des ausgewählten elektrischen Geräts definiert, nicht nur von aktuellen Parametern des ausgewählten elektrischen Gerätes und einer hierauf basierten ermittelten, zu diesem ausgewählten elektrischen Gerät gehörenden Zielfunktion abhängt, sondern zusätzlich zumindest eine Zielfunktion des Gesamtenergieverbrauchs der Gruppe der elektrischen Geräte in Form eines einstellbaren Schwellwertes Berücksichtigung findet. Folglich kann durch entsprechende Ansteuerung eines ausgewählten elektrischen Geräts die Aktivität dieses ausgewählten elektrischen Geräts innerhalb eines aktuellen Gesamtenergieverbrauchs-Profils zeitlich in eine Phase geringerer Last verschoben, und also der Gesamtenergieverbrauch gesenkt und Lastspitzen vermieden werden, ohne die Funktionalität des ausgewählten elektrischen Gerätes für einen Nutzer zu beeinträchtigen.

Entsprechend schlägt die Erfindung auch ein Fuzzy-Regelsystem zur Regelung des Gesamtenergieverbrauchs mehrerer elektrischer Geräte, welche eine Gruppe bilden, vor, wobei das Fuzzy-Regelsystem eine erste Fuzzy-basierte Vorrichtung besitzt, die dazu ausgebildet ist, für jedes elektrische Gerät innerhalb der Gruppe in Abhängigkeit von dessen aktuellem Energieverbrauch einen Prioritätswert zu ermitteln und wenigstens das elektrische Gerät mit dem höchsten Prioritätswert auszuwählen, und wobei das Fuzzy-Regelsystem eine zweite Fuzzy-basierte Vorrichtung besitzt, die dazu ausgebildet ist, zumindest für jedes ausgewählte elektrische Gerät in Abhängigkeit von dessen dazugehörendem Prioritätswert und dessen aktuellem Energieverbrauch sowie dem aktuellen Gesamtenergieverbrauch der Gruppe der elektrischen Geräte einen Stellwert zu ermitteln, derart, dass der Gesamtenergieverbrauch der Gruppe einen einstellbaren Schwellwert nicht überschreitet.

Grundsätzlich können die Fuzzy-basierten Vorrichtungen des erfindungsgemäßen Systems zur Durchführung des erfindungsgemäßen Verfahrens Teil eines einzigen Fuzzy-Reglers sein. Da dieser dann jedoch je nach einbezogenen elektrischen Geräten innerhalb der Gruppe von elektrischen Geräten komplex und aufwendig aufgebaut ist und gegebenenfalls anwendungspezifisch auch langsamer als separate, jedoch miteinander verknüpfte Fuzzy-Regler ist, ist bevorzugt vorgesehen, die erste Fuzzy-basierte Vorrichtung als einen ersten separaten Fuzzy-Regler und die zweite Fuzzy-basierte Vorrichtung als einen zweiten separaten Fuzzy-Regler auszubilden, wobei zur Verknüpfung der beiden Fuzzy-Regler der zweite Fuzzy-Regler mit dem Ausgang des ersten Fuzzy-Reglers verbunden ist.

Zweckmäßig wird somit jeder als eine zu berücksichtigende Zielfunktion ermittelte Prioritätswert innerhalb des erfindungsgemäßen Verfahrens als eine separate Stellgröße der nachfolgenden Ermittlung des Stellwertes für das ausgewählte elektrische Gerät zugeführt.

In zweckmäßiger Weiterbildung ist ferner eine dritte Fuzzy-basierte Vorrichtung vorgesehen und dazu ausgebildet, in Abhängigkeit von einem vorbestimmten Sollwert, von der aktuellen Zeit und dem aktuellen Gesamtenergieverbrauch einen Sollregelwert zu bestimmen, wobei in diesem Fall die zweite Fuzzy-basierte Vorrichtung bzw. der zweite Fuzzy-Regler dazu ausgebildet ist, für das ausgewählte elektrische Gerät zusätzlich zur Abhängigkeit von dem dazugehörenden Prioritätswert, von dessen aktuellem Energieverbrauch und dem aktuellen Gesamtenergieverbrauch der Gruppe von elektrischen Geräten auch in Abhängigkeit des Sollregelwertes einen Stellwert zu ermitteln, derart dass der Gesamtenergieverbrauch den einstellbaren Schwellwert nicht überschreitet.

Hierdurch kann dem Regelverhalten in Bezug auf die gesamte Gruppe von elektrischen Geräten eine Sollvorgabe direkt zugeordnet werden, da ein hierdurch beeinflusst ermittelter Stellwert die Dynamik der Regelung insgesamt beeinflusst.

Bevorzugt ist auch die dritte Fuzzy-basierte Vorrichtung als separater dritter Fuzzy-Regler ausgebildet, der dann zur Verknüpfung zumindest mit dem zweiten Fuzzy-Regler ebenfalls ausgangsseitig mit diesem zweiten Fuzzy-Regler verbunden ist.

Zweckmäßig wird somit wiederum jeder als eine weitere zu berücksichtigende Zielfunktion bestimmte Sollregelwert innerhalb des erfindungsgemäßen Verfahrens als eine separate Stellgröße der nachfolgenden Ermittlung des Stellwertes für das ausgewählte elektrische Gerät zugeführt.

In Weiterbildung ist ferner vorgesehen, die Ermittlungen des Prioritätswertes für jedes elektrische Gerät nicht nur in Abhängigkeit von dessen aktuellen Energieverbrauch sondern zusätzlich in Abhängigkeit eines zu jedem elektrischen Gerätes individuell dazugehörenden Kritikalitätsmaßes durchzuführen.

Eine hierzu entsprechend ausgebildete erste Fuzzy-basierte Vorrichtung ist zweckmäßig derart ausgebildet, das zu einem elektrischen Gerät gehörende Kritikalitätsmaß in Abhängigkeit von einem gerätespezifischen Aktivitätswert, einem gerätespezifischen Kontaktwert und/oder einem gerätespezifischen Sicherheitsrelevanzwert zu ermitteln.

Ergänzend oder alternativ kann die zweite Fuzzy-basierte Vorrichtung zweckmäßig derart ausgebildet sein, den Stellwert für jedes ausgewählte elektrische Gerät nicht nur in Abhängigkeit von dessen aktuellen Energieverbrauch, dem aktuellen Gesamtenergieverbrauch der Gruppe und dem Prioritätswert zu ermitteln sondern zusätzlich in Abhängigkeit eines zu jedem ausgewählten elektrischen Gerät individuell dazugehörenden Relevanzmaßes, wobei hierzu die zweite Fuzzy-basierte Vorrichtung bevorzugt dazu ausgebildet ist, das zu einem ausgewählten elektrischen Gerät gehörende Relevanzmaß in Abhängigkeit von der aktuellen Zeit, einem gerätespezifischen Aktivitätswert und/oder einer gerätespezifischen Nutzungsdauer zu ermitteln.

In weiterer bevorzugter Ausführung ist vorgesehen, dass die zweite und/oder dritte Fuzzy-basierte Vorrichtung jeweils zumindest einen Speicher aufweist, in welchem vorbestimmte zeitliche Nutzungsprofile gespeichert sind, und jeweils dazu ausgebildet ist, unter Ansprechen auf den zu vorbestimmten oder vorbestimmbaren Zeitpunkten ermittelten Gesamtenergieverbrauch ein vorbestimmtes Nutzungsprofil zu erkennen. Anhand eines erkannten Nutzungsprofils können folglich auch potentiell zukünftige Lastspitzen des Gesamtenergieverbrauchs als Erwartungshaltung mit in die Ermittlung des Stellwertes für ein ausgewähltes elektrisches Gerät berücksichtigend einfließen, so dass die erfindungsgemäß vorgeschlagene Regelung auch für verschiedene, wiederkehrende Gesamtenergieverbrauchs-Profile frühzeitig adaptierbar ist bzw. adaptiert wird.

Weitere Vorteile und Merkmale der Erfindung werden aus der nachfolgenden Beschreibung bevorzugter Ausführungsbeispiele unter Bezugnahme auf die beigefügten Zeichnungen ersichtlich.

In den Zeichnungen zeigen:
Fig. 1 eine vereinfacht dargestellte Skizze eines bevorzugten Ausführungsbeispiels einer ersten, als Fuzzy-Regler ausgebildeten, Fuzzy-basierten Vorrichtung eines erfindungsgemäßen Fuzzy-Regelsystems zur Veranschaulichung verschiedener Ausführungsformen,
Fig. 2 eine vereinfacht dargestellte Skizze eines bevorzugten Ausführungsbeispiels einer zweiten, als Fuzzy-Regler ausgebildeten, Fuzzy-basierten Vorrichtung innerhalb eines erfindungsgemäßen Fuzzy-Regelsystems zur Veranschaulichung verschiedener Ausführungsformen ,
Fig. 3 eine vereinfacht dargestellte Skizze eines bevorzugten Ausführungsbeispiels einer dritten, als Fuzzy-Regler ausgebildeten, Fuzzy-basierten Vorrichtung innerhalb eines erfindungsgemäßen Fuzzy-Regelsystems zur Veranschaulichung verschiedener Ausführungsformen,
Fig. 4 bis 10 zweckmäßige Fuzzy-Sets in Bezug auf variable Aktivität, variablen Kontakt, variable Sicherheitsrelevanz, variablen Verbrauch, variable Zeit, variablen Sollwert und variable Priorität als einige Beispiele von linguistisch beschriebenen, einem jeweiligen elektrischen Gerät zuweisbaren Variablen gemäß eines erfindungsgemäßen Fuzzy-Regelsystems zur Veranschaulichung verschiedener Ausführungsformen,
Fig. 11 bis 16 beispielhafte Energieverbrauchsverläufe über die Zeit anhand beispielhafter elektrischer Geräte,
Fig. 17 einen beispielhaften Gesamtenergieverbrauch mehrerer elektrischer Geräte, welche eine Gruppe bilden, über die Zeit,
Fig. 18 einen beispielhaften Gesamtenergieverbrauch ähnlich zu Fig. 17 in Relation zu einem maximalen, vorgegebenen oder vorgebbaren Energieverbrauch, und
Fig. 19 eine Prinzipskizze eines bevorzugten Ausführungsbeispiels eines erfindungsgemäßen Verfahrens zur Regelung des Gesamtenergieverbrauchs mehrerer elektrischer Geräte, welche einen Gruppe bilden, zur Veranschaulichung verschiedener Ausführungsformen.

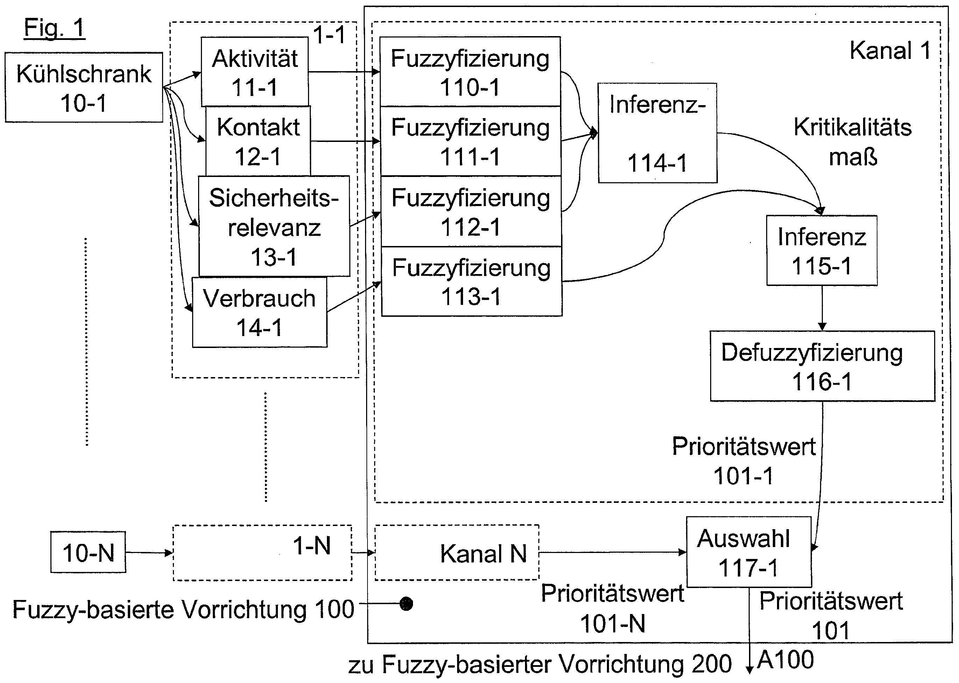

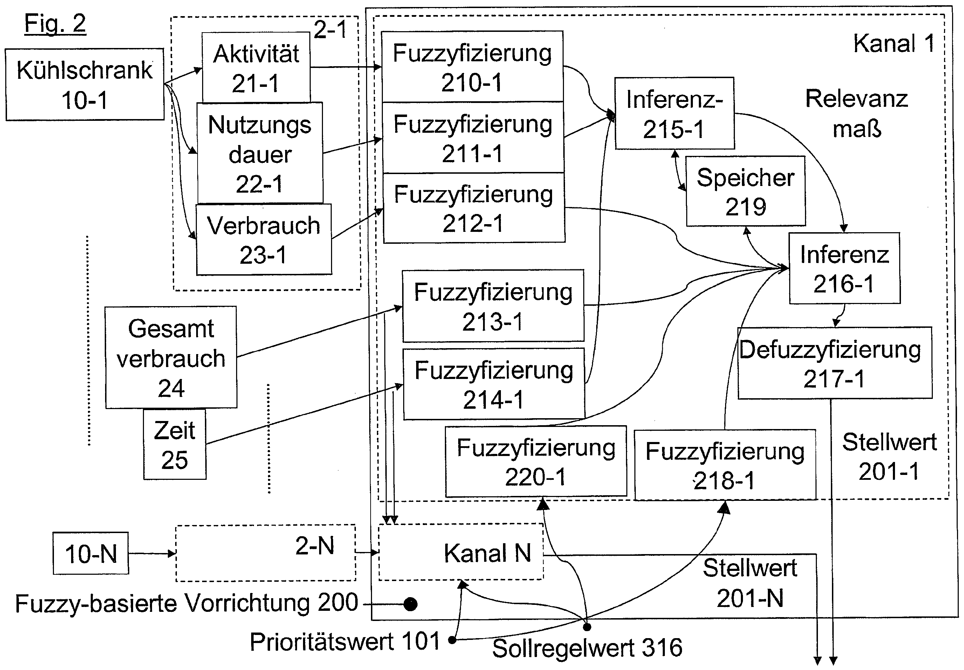

Nachfolgend wird zunächst auf die Fig. 1 und 2 Bezug genommen, welche eine erste Fuzzy-basierte Vorrichtung 100 bzw. eine zweite Fuzzy-basierte Vorrichtung 200 eines erfindungsgemäßen Fuzzy-Regelsystems zur Regelung des Gesamtenergieverbrauchs mehrerer elektrischer Geräte 10-1 bis 10-N, welche eine Gruppe bilden, zeigen. Die erste Fuzzy-basierte Vorrichtung ist gemäß Figur 1 zweckmäßig als separater Fuzzy-Regler ausgebildet und auch die zweite Fuzzy-basierte Vorrichtung gemäß Figur 2 ist zweckmäßig als separater zweiter Fuzzy-Regler ausgebildet wobei zur Verknüpfung der beiden Fuzzy-Regler der zweite Fuzzy-Regler mit dem Ausgang des ersten Fuzzy-Reglers verbunden ist.

Bekanntermaßen gehören Fuzzy-Regler zur Klasse der Kennfeld-Regler, die der Theorie der Fuzzy-Logik entsprechen. Üblicherweise werden in jedem Reglungsschritt drei Teilschritte durchgeführt, das sind der Schritt einer Fuzzyfizierung, einer Inferenz und am Schluss den Schritt einer Defuzzifizierung, wobei die einzelnen Ein- und Ausgänge als linguistische Variablen beschrieben werden, zu denen jeweils Fuzzy-Mengen gehören.

Eine linguistische Eingangsvariable kann zum Beispiel die Temperatur eines elektrischen Gerätes sein und eine linguistische Ausgangsvariable zum Beispiel eine Ventilstellung für eine Kühlluftzuführung.

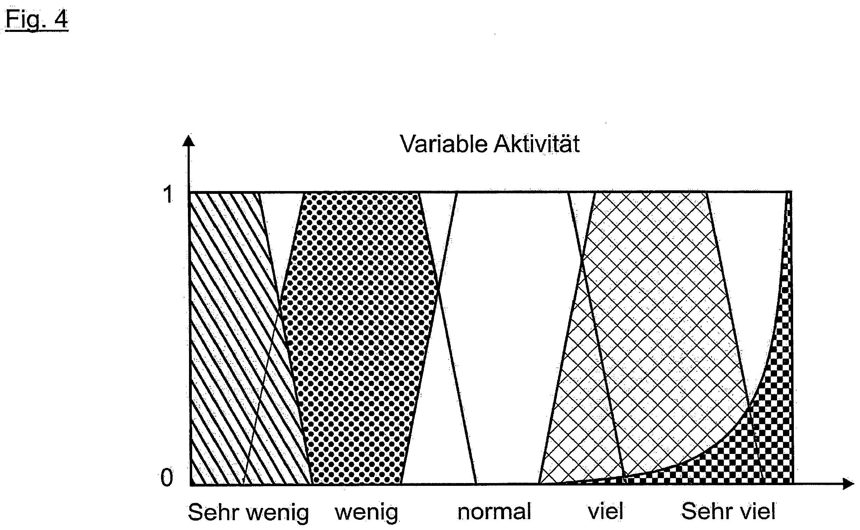

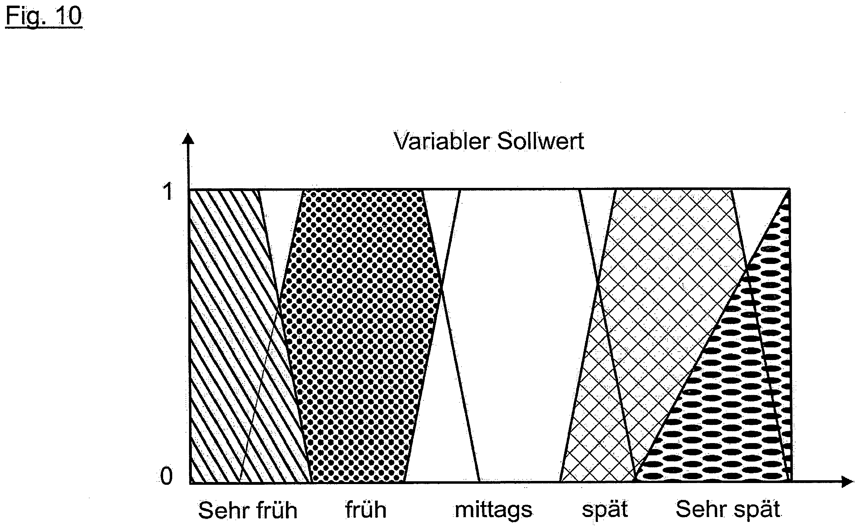

Die Fuzzy-Mengen wiederum werden aus einer Menge von Zugehörigkeitsfunktionen, auch Fuzzy-Sets genannt, gebildet. Diese Zugehörigkeitsfunktionen oder Fuzzy-Sets sind üblicherweise vorkonfiguriert und können beispielsweise die Form eines Dreiecks, Trapezes oder Kurvenstücks annehmen (vgl. Fig. 4 bis 10). Die Fuzzy-Sets ordnen die linguistischen Eingangsvariablen in "unscharfe" Klassen ein und belegen die zu linguistischen Eingangsvariablen entsprechend durch Messung oder anders erhaltenen "scharfen" Eingangswerte mit einem Klassenzugehörigkeitswert zwischen 0% und 100%. Entsprechend können die zu einer linguistischen Ausgangsvariable entsprechend auszugebenden "scharfen" Ausgangswerte auf Zugehörigkeitsfunktionen basieren, und einen Zugehörigkeitswert in Bezug auf die unscharfe Klasseneinteilung von 0% bis 100% belegen.

Der Fuzzy-Regler bestimmt einen auszugebenden Stellwert aus der Regeldifferenz, das heißt aus der Differenz eines Sollwertes und eines gemessenen Istwertes, durch Abarbeitung der Schritte Fuzzyfizierung, Inferenz und Defuzzifizierung.

Bei der Fuzzyfizierung werden den mittels linguistischer Variablen beschriebenen Eingangswerten zugeordnete Fuzzy-Sets ausgewertet und Werte für Klassenzugehörigkeiten bestimmt.

Im Schritt der Inferenz werden anhand der Werte für Klassenzugehörigkeiten die Regeln für die Berechnung der Ausgabe vorgegeben und hierdurch auch eine Gewichtung der in die Berechnung einfließenden Größen bestimmt.

Bei der Defuzzyfizierung werden die mittels linguistischer Variablen beschriebenen Ausgangswerte basierend auf den Regeln für die Berechnung und Gewichtung bestimmten Zugehörigkeitsfunktionen zugeordnet und entsprechend einem Zugehörigkeitswert bestimmt.

Ein Fuzzy-Regler ist somit ein nicht linearer Kennfeld- oder Zustandsregler und weist vom Grundsatz her keine innere Dynamik auf.

Zurückkommend auf die Figuren 1 und 2, welche die erste Fuzzy-basierte Vorrichtung gemäß Figur 1 zweckmäßig als separater Fuzzy-Regler 100 ausgebildet und auch die zweite Fuzzy-basierte Vorrichtung gemäß Figur 2 zweckmäßig als separater zweiter Fuzzy-Regler 200 ausgebildet zeigen, sei darauf hingewiesen, dass die erste Fuzzy-basierte Vorrichtung in Abwandlung zu Figur 1 und die zweite Fuzzy-basierte Vorrichtung in Abwandlung zu Figur 2 auch beide gemeinsam Teile eines einzigen Fuzzy-Reglers sein können, wobei der Aufbau dann jedoch aufgrund der internen Quer-Rückführungen komplexer und aufwendiger wird. Der Einfachheit halber bezieht sich die nachfolgende Beschreibung daher auf die bevorzugte Ausführungsform, dass die erste Fuzzy-basierte Vorrichtung gemäß Figur 1 und die zweite Fuzzy-basierte Vorrichtung gemäß Figur 2 zwei separate Fuzzy-Regler 100 bzw. 200 sind, die miteinander derart verknüpft sind, dass der zweite Fuzzy-Regler 200 zwei gemäß Figur 2 mit dem Ausgang "A100" des ersten Fuzzy-Reglers 100 gemäß Figur 1 verbunden ist.

Beispielhaft für mehrere elektrische Geräte, welche eine Gruppe bilden, deren Gesamtenergieverbrauch erfindungsgemäß regelbar ist, ist ein erstes elektrisches Gerät 10-1, beispielsweise ein Kühlschrank, bei Figur 1 an den Fuzzy-Regler 100 angeschaltet und wenigstens ein zweites elektrisches Gerät 10-N, beispielsweise eine Waschmaschine.

Grundsätzlich kann eine Anzahl von N elektrischen Geräten, die eine gemeinsame Gruppe bilden, sukzessive und also jeweils nacheinander am selben Verarbeitungskanal angeschaltet werden, so dass in einfachster Ausführung und in abgewandelter Ausbildung zur Fuzzy-basierten Vorrichtung 100 gemäß Figur 1 auch eine Fuzzy-basierte Vorrichtung mit lediglich einem Verarbeitungskanal im Rahmen der Erfindung eingesetzt werden kann.

Zweckmäßig stellt die als Fuzzy-Regler gemäß Figur 1 ausgebildete Fuzzy-basierte Vorrichtung 100 jedoch für jedes angeschaltete elektrische Gerät einen Verarbeitungskanal zur Verfügung, so dass für einen N-kanalig ausgelegten Fuzzy-Regler 100 eine Anzahl von N elektrischen Geräten, die eine gemeinsame Gruppe bilden, an den Fuzzy-Regler 100 gemeinsam, d.h. parallel angeschaltet werden können.

Die als erste Fuzzy-Regler 100 aufgebaute erste Fuzzy-basierte Vorrichtung ist erfindungsgemäß ausgebildet, für jedes elektrische Gerät, also gemäß Figur 1 für die Geräte 10-1 bis 10-N in Abhängigkeit von dessen jeweiligem aktuellem Energieverbrauch einen Prioritätswert zu ermitteln und wenigstens das elektrische Gerät 10-1,...,10-N mit dem höchsten Prioritätswert auszuwählen.

Hierzu ist ferner zweckmäßig jedes elektrische Gerät 10-1 bis 10-N über eine Anschalteinrichtung 1-1 bis 1-N an jeweils einen Kanal des ersten Fuzzy-Reglers 100 angeschaltet.

Eine solche Anschalteinrichtung 1-1 umfasst somit zumindest einen Verbrauchsmesser 14-1, der den Verbrauch an Energie des angeschalteten elektrischen Gerätes 10-1 als einen Eingangswert für den Kanal 1 erfasst. Sind in vorstehend aufgezeigter, abgewandelter Ausführung die Anzahl von N elektrischen Geräten, die eine gemeinsame Gruppe bilden, sukzessive und also jeweils nacheinander an einen selben Verarbeitungskanal anzuschalten, können alle elektrischen Geräte z.B. an die selbe Anschalteinrichtung angeschaltet sein, welche dann zweckmäßig eine entsprechende Auswahleinrichtung beinhaltet, mit welcher die elektrischen Geräte wiederum sukzessive an den selben Verarbeitungskanal angeschaltet werden können.

Die gemäß zweckmäßiger Ausführung nach Fig. 2 weiteren Anschalteinrichtungen umfassen entsprechend der Anschalteinrichtung 1-1 gleichermaßen zumindest jeweils einen Verbrauchsmesser, die den Energieverbrauch der über die Anschalteinrichtungen jeweils angeschalteten elektrischen Geräte als einen Eingangswert für die weiteren Kanäle erfassen.

Da somit sowohl die Anschalteinrichtungen 1-1 bis 1-N als auch die Kanäle 1 bis N des ersten Fuzzy-Reglers 100 von ihrem Aufbau her einander entsprechen können, wird nachfolgend lediglich auf einen bevorzugten Aufbau des Kanals 1 des ersten Fuzzy-Reglers 100 eingegangen.

Der Ausgangswert des Verbrauchsmessers 14-1, welcher den aktuellen Energieverbrauch des elektrischen Geräts 10-1 misst, entspricht somit einem aktuellen Verbrauchswert und wird als Eingangswert zunächst einer zur Fuzzyfizierung entsprechend angepassten Einrichtung 113-1 des Kanals 1 des ersten Fuzzy-Reglers 100 zugeführt. Der Kanal 1 weist der Einrichtung 113-1 logisch nachgeschaltet eine zur Durchführung einer Inferenz entsprechend angepasste Einrichtung 115-1 und dieser nachgeschaltet eine zur Durchführung einer Defuzzyfizierung entsprechend angepasste Einrichtung 116-1 auf.

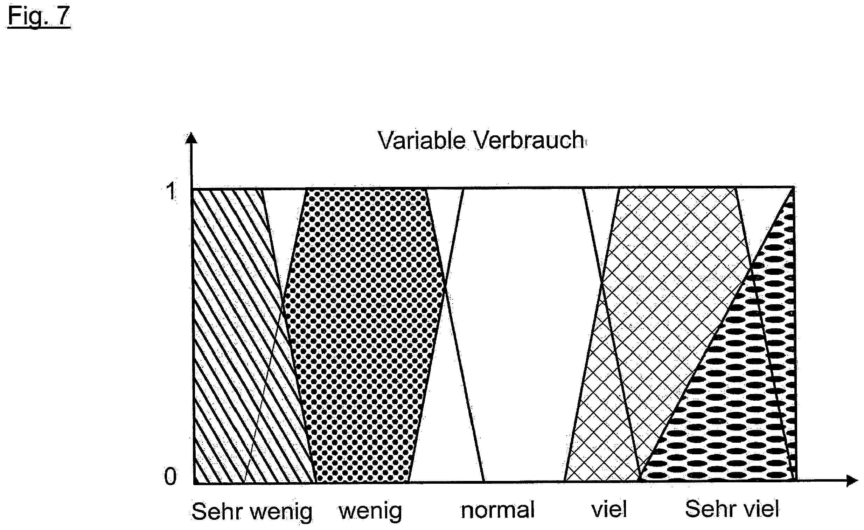

Zur Fuzzy-basierten Verarbeitung des Ausgangswerts des Verbrauchsmessers 14-1 sind in der Fuzzy-basierten Vorrichtung 100 zur Beschreibung einer linguistischen Variablen "Verbrauch" beispielsweise dem elektrischen Gerät 10-1 zugeordnete Fuzzy-Sets gemäß Figur 7 hinterlegt, welche die linguistische Eingangsvariable "Verbrauch" in "unscharfe" Klassen z.B. von "sehr wenig" bis "sehr viel" einordnet, und auf welche die die Fuzzy-basierte Verarbeitung durchführenden Einrichtungen des Fuzzy-Reglers 100 entsprechend der internen Reglerverschaltung zurückgreifen können. Basierend auf dem zu dem elektrischen Gerätes 10-1 gehörenden Ausgangswert des Verbrauchsmessers 14-1 wertet die Fuzzyfizierungseinrichtung 113-1 diese Fuzzy-Sets aus und bestimmt die Werte für Klassenzugehörigkeiten für den gemessenen Energieverbrauch. Der Energieverbrauch wird folglich mittels linguistischer Variablen beschrieben. Die Werte der Klassenzugehörigkeiten können hierbei in der Regel zwischen 0% und 100% liegen, wobei Figur 7 an der linken Ordinate mit dem Wert 0 "0%" und mit dem Wert 1 "100%" bezeichnet und auf der Abszisse von Figur 7 die unscharfen Energieverbrauchsbereiche eingetragen sind. Ein von dem Verbrauchsmesser 14-1 gemessener Energieverbrauch des elektrischen Gerätes 10-1 und entsprechend ausgegebener Verbrauchswert könnte beispielsweise basierend auf Figur 7 zu 80% als normal und zu 60% als wenig eingeordnet werden.

Derartige Fuzzy-Sets sind bevorzugt vorkonfiguriert und können zum Beispiel die Form eines Dreiecks oder eines Trapezes aber auch eines Kurvenstücks annehmen, wobei diesbezüglich und zur Dokumentation des Fachwissens des hier anzusetzenden Fachmanns vollumfänglich auf die Offenlegungsschrift DE 195 02 230 A1 verwiesen wird.

Die von der Fuzzyfizierungseinrichtung 113-1 als aktive Fuzzy-Sets bezeichneten Sets, d.h. die Sets, die eine Zugehörigkeit größer 0% zu der gemessenen Eingangsgröße haben, und also gemäß obigen Beispiels das Fuzzy-Set "normal" und das Fuzzy-Set "wenig", werden daraufhin der Inferenzeinrichtung 115-1 kommuniziert, welche diese als aktiv bezeichneten Fuzzy-Sets durch vorher festgelegte Regeln für die Berechnung einer Ausgabe vorbereitet. In der Inferenzeinrichtung 115-1 sind somit Regelwerke für die einzelnen Fuzzy-Sets hinterlegt, die von dieser ausgewählt und für die nachfolgende Berechnung einer Ausgabe entsprechend festgelegt werden, sofern ein jeweiliges Fuzzy-Set als aktiv von der Fuzzyfizierungseinrichtung 113-1 der Inferenzeinrichtung 115-1 mitgeteilt worden ist. Die Inferenzeinrichtung 115-1 legt hierdurch somit auch eine Gewichtung von in die Berechnung einfließenden Größen fest. Das Ergebnis der Auswahl und Festlegung wird der Defuzzyfizierungseinrichtung 116-1 übergeben, welche daraufhin einen scharfen Ausgangswert bestimmt. Hierbei können, wie dem Fachmann an und für sich bekannt ist, verschiedene Methoden angewendet werden, wobei beispielsweise im Fall von Dreiecks- oder Trapezförmigen Fuzzy-Sets ein Flächenschwerpunkt der als aktiv bezeichneten Fuzzy-Sets berechnet wird. Als Ausgangsgröße stellt die Defuzzyfizierungseinrichtung 116-1 dann einen Prioritätswert 101-1 für das elektrische Gerät 10-1 bereit, der auf einer Skala von 0 bis 1 bzw. 0% bis 100% eine Priorität dieses Gerätes 10-1 in Bezug auf dessen aktuelle Energieversorgung angibt, und also die dringende Notwendigkeit regelnd einzugreifen (100%) oder ob aufgrund des aktuellen Energieverbrauchs beispielsweise keine solche dringende Notwendigkeit vorliegt, so dass zum Beispiel ein Prioritätswert von 75% vorliegt. Im Falle eines Kühlschrankes als elektrisches Gerät 10-1 würde die Notwendigkeit regelnd einzugreifen, z.B. eine Reduzierung des Energieverbrauchs, beispielsweise um 25%, folglich zu einem Ansteigen der Temperatur im Kühlschrank führen, wobei eine Absenkung des Energieverbrauchs um 25% beispielsweise mit einem Steigen der Temperatur um 5° einhergehen würde, welches im vorliegenden Beispiel als annehmbar angenommen sei.

Wie bereits vorstehend hingewiesen, sind die Kanäle 1 bis N des ersten Fuzzy-Reglers 100 zweckmäßig einander entsprechend aufgebaut, so dass gemäß Figur 1 z.B. über den Kanal N auch ein Prioritätswert 101-N für das an diesen Kanal N über die Anschalteinrichtung 1-N angeschaltete elektrische Gerät 10-N basierend auf dem für dieses Gerät gemessenen aktuellen Energieverbrauch ausgegeben wird.

Alle Prioritätswerte 101-1 bis 101-N werden darauf hin einer Auswahleinrichtung 117-1 des ersten Fuzzy-Reglers 100 übergeben, welche wenigstens das elektrische Gerät mit dem höchsten zugehörenden Prioritätswert auswählt. Der am Ausgang A100 anliegende Ausgangswert ist dann z.B ein von der Auswahleinrichtung ausgegebener Prioritätswert 101, über den das wenigstens eine entsprechend ausgewählte elektrische Gerät eindeutig identifizierbar ist. Der von der Auswahleinrichtung 117-1 ausgegebene Prioritätswert 101 entspricht somit wenigstens einem der Prioritätswerte 101-1 bis 101-N.

Ist in Abwandlung zur zweckmäßigen Ausbildung gemäß Fig. 1 wie vorstehend aufgezeigt vorgesehen, eine Anzahl von N elektrischen Geräten, die eine gemeinsame Gruppe bilden, sukzessive und also jeweils nacheinander an einen selben Verarbeitungskanal anzuschalten, sind die jeweils ermittelten Prioritätswerte 101-1 bis 101-N folglich zur Auswahl des elektrischen Geräts mit dem höchsten zugehörenden Prioritätswert zuvor in einem hierfür vorgesehen Speicher zwischen zu speichern. Die Zwischenspeicherung kann hierbei vor der Übergabe an die Auswahleinrichtung 117-1 erfolgen oder die Auswahleinrichtung 117-1 selbst kann hiefür einen entsprechenden Speicher beinhalten.

In jedem Fall ist jedoch zweckmäßig auch in der Auswahleinrichtung 117-1 ein Regelwerk hinterlegt, so dass hierauf basierend gegebenenfalls auch zwei oder mehr elektrische Geräte mit den höchsten Prioritätswerten auswählbar sind. Infolge dessen kann der von der Auswahleinrichtung ausgegebene Prioritätswert 101 auch mehrere von den Prioritätswerten 101-1 bis 101-N umfassen.

Das erfindungsgemäße Fuzzy-Regelsystem besitzt, wie bereits erwähnt, eine zweite Fuzzy-basierte Vorrichtung 200, welche in einer bevorzugten Ausführungsform gemäß Figur 2 als zweiter Fuzzy-Regler aufgebaut ist und an welche der von der Auswahleinrichtung am Ausgang A100 ausgegebene Prioritätswert 101 übergeben wird. Auch diese zweite Fuzzy-basierte Vorrichtung weist zweckmäßig wiederum für jedes elektrische Gerät 10-1 bis 10-N aus der Gruppe von elektrischen Geräten, deren Gesamtenergieverbrauch erfindungsgemäß zu regeln ist, einen Verarbeitungskanal auf.

Diese zweite Fuzzy-basierte Vorrichtung 200 ist nunmehr derart ausgebildet, für das ausgewählte elektrische Gerät, also das Gerät, welches durch die erste Fuzzy-basierte Vorrichtung ausgewählt worden ist, in Abhängigkeit von dem, in dem übergebenen Prioritätswert 101 enthaltenen dazugehörenden Prioritätswert, z.B. 101-1, sowie von dem aktuellen Energieverbrauch des ausgewählten elektrischen Gerätes und dem aktuellen Gesamtenergieverbrauch der Gruppe von elektrischen Geräten einen Stellwert zu ermitteln, derart, dass der Gesamtenergieverbrauch der Gruppe einen einstellbaren Schwellwert nicht überschreitet.

Der Einfachheit halber ist hierzu wiederum jedes der elektrischen Geräte 10-1 bis 10-N über eine Anschalteinrichtung 2-1 bis 2-N jeweils mit einem Kanal der zweiten Fuzzy-basierten Vorrichtung 200 verbunden, welche zur Ermittlung des aktuellen Energieverbrauchs zumindest jeweils einen Verbrauchsmesser umfassen, z.B. die Anschalteinrichtung 2-1 einen Verbrauchsmesser 23-1 zur Ermittlung des Verbrauchs des elektrischen Geräts 10-1 bzw. 23-n. Die Verbrauchsmesser der Anschalteinrichtungen 2-1 bis 2-N können hierbei den Verbrauchsmesser der Anschalteinrichtungen 1-1 bis 1-N entsprechen oder auch separate Verbrauchsmesser sein.
Ferner wird von der ersten Fuzzy-basierten Vorrichtung 100 der ausgegebene Prioritätswert 101 an die zweite Fuzzy-basierte Vorrichtung 200 übergeben.

Die zweite Fuzzy-basierte Vorrichtung 200 identifiziert hierauf basierend das von der ersten Fuzzy-basierten Vorrichtung 100 ausgewählte elektrische Gerät und den dazugehörenden, im übergebenen Prioritätswert 101 enthaltenen Prioritätswert, welches jedoch aus Gründen der Übersichtlichkeit in den Figuren nicht weiter dargestellt ist.

Gemäß Beispiel nach Figur 2, bei welchem für jedes der elektrischen Geräte 10-1 bis 10-N mittels der jeweils zugeordneten Verbrauchsmesser der aktuelle Energieverbrauch gemessen wird, erfolgt die Identifizierung des durch die erste Fuzzy-basierte Einrichtung 100 der zweiten Fuzzy-basierten Einrichtung 200 mitgeteilten ausgewählten elektrischen Geräts zu einem späteren Verarbeitungsschritt, z.B. erst bei der Durchführung einer Inferenz.

Die Identifizierung kann jedoch auch in Abwandlung zur Figur 2 zu einem früheren Verarbeitungsschritt erfolgen, so dass beispielsweise lediglich die Kanäle der zweiten Fuzzy-basierten Vorrichtung 200 aktiv betrieben werden, die mit dem wenigstens einen ausgewählten elektrischen Gerät verbunden sind. Wurde beispielsweise von der ersten Fuzzy-basierten Einrichtung als Prioritätswert 101 ein Wert übergeben, der lediglich den Prioritätswert 101-1 umfasst und also das elektrische Gerät 10-1 als ausgewähltes elektrisches Gerät identifiziert, so kann es beispielsweise ausreichend sein, lediglich den Verbrauchsmesser 23-1 und den damit verbundenen Kanal 1 gemäß Figur 2 aktiv zu betreiben, nicht jedoch die weiteren Verbrauchsmesser und/oder Kanäle.

Ferner ist, gemäß Figur 2 ein Verbrauchsmesser 24 vorgesehen, der den aktuellen Gesamtverbrauch an Energie der Gruppe der elektrischen Geräte 10-1 bis 10-N erfasst. Dieser kann mit allen elektrischen Geräten direkt verbunden sein oder aber mit den, den einzelnen elektrischen Geräten jeweils zugeordneten Verbrauchsmessern oder aber an zentraler Stelle, beispielsweise einer Hauptversorgungsleitung für die Gruppe von elektrischen Geräten angeschaltet sein.

Zur Fuzzy-basierten Verarbeitung in der Fuzzy-basierten Vorrichtung 200 sind zur Beschreibung einer linguistischen Variablen "Verbrauch" entsprechend zur Beschreibung zu Figur 1 wiederum für die elektrischen Geräte zugeordnete Fuzzy-Sets sowie zur Beschreibung einer linguistischen Variablen "Gesamtverbrauch" entsprechend zur Beschreibung zu Figur 1 wiederum für die elektrischen Geräte insgesamt zugeordnete Fuzzy-Sets hinterlegt, die bevorzugt ähnlich der Figur 7 aufgebaut sind, und auf welche die die Fuzzy-basierte Verarbeitung durchführenden Einrichtungen des Fuzzy-Reglers 200 entsprechend der internen Reglerverschaltung zurückgreifen können.

Ähnlich der ersten Fuzzy-basierten Vorrichtung 100 wird für den von dem Verbrauchsmesser 23-1 für das elektrische Gerät 10-1 ermittelte Verbrauch ein Verbrauchswert an eine Fuzzyfizierungseinrichtung 212-1 übergeben, welche daraufhin eine fuzzyfizierte Ausgangsgröße an eine Inferenzeinrichtung 316-1 übergibt. Auch der Gesamtenergieverbrauch, d.h. ein Gesamtverbrauchswert des von dem Verbrauchsmesser 24 ermittelten Gesamtverbrauchs wird einer Fuzzyfizierungseinrichtung 213-1 übergeben und anschließend wird von dieser eine fuzzyfizierte Ausgangsgröße ebenfalls an die Inferenzeinrichtung 216-1 übergeben.

Ferner wird gemäß Ausführungsform nach Figur 2 auch der Prioritätswert 101 von der ersten Fuzzy-basierten Vorrichtung 100 der Fuzzyfizierungseinrichtung 218-1 als Eingangswert übergeben, welche deren Ausgangsgröße ebenfalls der Inferenzeinrichtung 216-1 als weitere Eingangsgröße übergibt. Je nach interner spezifischer Ausgestaltung der zweiten Fuzzy-basierten Vorrichtung 200 kann der von der ersten Fuzzy-basierten Vorrichtung 100 bestimmte Prioritätswert 101 gegebenenfalls auch direkt der Inferenzeinrichtung 216-1 zugeführt werden.

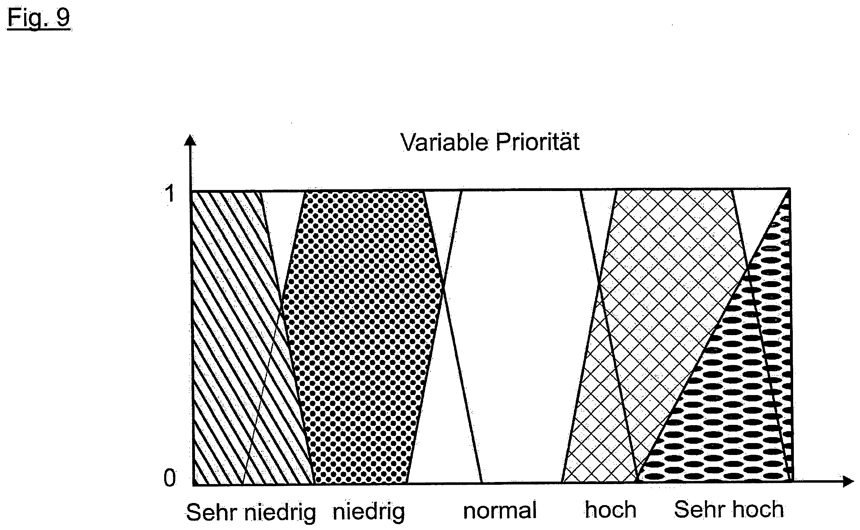

Zur Fuzzy-basierten Verarbeitung des Wertes für die Aktivität sind in der Fuzzy-basierten Vorrichtung 100 somit zweckmäßig ebenfalls zur Beschreibung einer linguistischen Variablen "Priorität" Fuzzy-Sets z.B. gemäß Figur 9 hinterlegt, auf welche die die Fuzzy-basierte Verarbeitung durchführenden Einrichtungen des Fuzzy-Reglers 100 entsprechend der internen Reglerverschaltung zurückgreifen können.

Es sei darauf hingewiesen, dass gemäß Skizze nach Figur 2 der Prioritätswert 101 sowie der durch den Gesamtverbrauchsmesser 24 ermittelte Gesamtverbrauch an Energie darüber hinaus in identischer Weise an alle anderen Kanäle der zweiten Fuzzy-basierten Vorrichtung 200 übergeben wird, da wie zuvor erwähnt die Identifizierung des durch die erste Fuzzy-basierte Vorrichtung 100 ausgewählten elektrischen Geräts durch die zweite Fuzzy-basierte Vorrichtung 200 beispielhaft erst in einem nachfolgenden Schritt, insbesondere innerhalb der Inferenzeinrichtungen 216-1 für Kanal 1 und in entsprechender Weise in den Inferenzeinrichtungen der weiteren Kanäle für die weiteren elektrischen Geräte erfolgt.

Würde also beispielhaft der eindeutig zuordenbare Prioritätswert 101-1 von der ersten Fuzzy-basierten Vorrichtung 100 an die zweite Fuzzy-basierte Einrichtung 200 übergeben, erfolgt in der Inferenzeinrichtung 216-1 eine entsprechend den dort festgelegten Regeln hohe Gewichtung für die Berechnung der zu dem elektrischen Gerät 10-1 gehörenden Ausgabe. Ist in dem übergegebenen Prioritätswert 101 der Prioritätswert 101-1 nicht enthalten, erfolgt somit eine Gewichtung von 0.

Die Ausgangsgröße der Inferenzeinrichtung 216-1 wird daraufhin einer Defuzzyfizierungseinrichtung 217-1 übergeben, die einen Stellwert 201-1 für das elektrische Gerät 10-1 ermittelt, sofern dieses ein ausgewähltes Gerät ist, derart, dass der Gesamtenergieverbrauch der Gruppe von elektrischen Geräten einen einstellbaren Schwellwert nicht überschreitet.

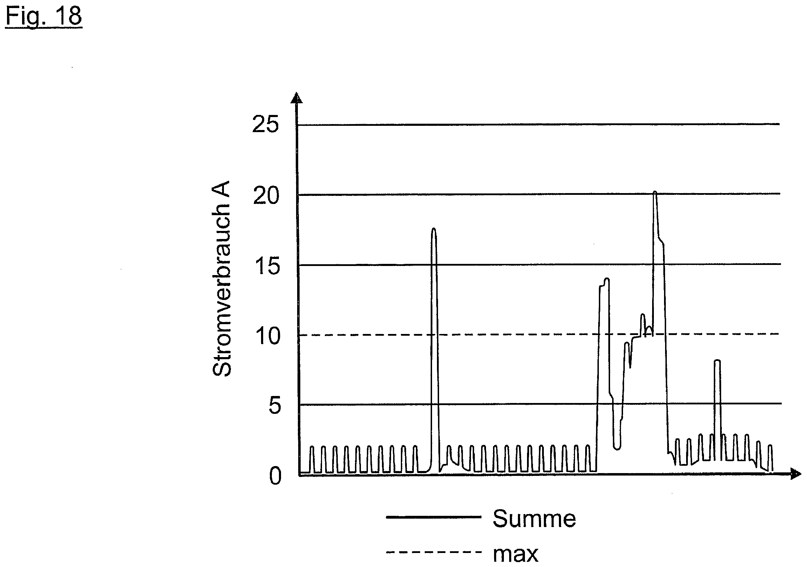

Ein solcher einstellbarer Schwellwert kann beispielsweise, wie in Figur 18 zu sehen, welche einen beispielhaften Gesamtenergieverbrauch mehrerer elektrischer Geräte, welche eine Gruppe bilden, über die Zeit und in Relation zu einem maximalen, vorgegebenen oder vorgebbaren Energieverbrauch zeigt, ein solcher maximaler Verbrauchswert über die Zeit sein, wobei in Figur 18 an der linken Ordinate der Gesamtenergieverbrauch aller die Gruppe bildenden elektrischen Geräte basierend auf dem Stromverbrauch abgebildet ist und an der Abszisse eine Zeitachse darstellt ist. Folglich weist zum Beispiel Figur 18 im Wesentlichen drei über dem Maximalwert liegende Spitzenwerte des Gesamtenergieverbrauchs innerhalb einer bestimmten Zeit auf.

Ein solcher maximaler Verbrauchswert über die Zeit ist somit in der Fuzzy-basierten Vorrichtung derart einstellbar oder hinterlegt, dass auf diesen die Inferenzeinrichtungen bereits zur Festlegung der Berechnungen und/oder die Defuzzyfizierungseinrichtungen zur Bestimmung der Stellwerte für das wenigstens eine ausgewählte elektrische Gerät zurückgreifen können.

Ein solcher Stellwert 201-1 für das elektrische Gerät 10-1 und entsprechend für die weiteren Kanäle definiert beispielsweise den Zeitpunkt des Einschaltens oder auch des Ausschaltens, des Taktens, d.h. die Dauer einer Verschiebung eines Einschaltzeitpunktes des elektrischen Geräts, so dass darüber der Stromverbrauch des ausgewählten elektrischen Geräts steuerbar und infolge auch der Gesamtverbrauch der Gruppe der elektrischen Geräte an Energie gesteuert wird. Ist also beispielsweise das elektrische Gerät 10-1 ein Kühlschrank, kann also beispielsweise die Stellgröße 201-1 die Aktivität des elektrischen Geräts zweckmäßig bis in eine Zeitphase mit geringem Gesamtenergieverbrauchs verschieben, innerhalb welcher der Schwellwert dann nicht überschritten wird.

Die Stellgröße 201-1 wird hierzu dem elektrischen Gerät 10-1 zur entsprechenden Steuerung zugeführt (nicht dargestellt).

Aus vorstehender Beschreibung zu Fig. 2 ist ersichtlich, dass auch in Bezug auf die zweite Fuzzy-basierte Vorrichtung in Abwandlung grundsätzlich ein einziger Verarbeitungskanal ausreichend sein kann, an den dann das ausgewählte elektrische Gerät nach entsprechender Auswahl angeschaltet wird oder mehrere ausgewählte elektrische Geräte nach entsprechender Auswahl sukzessive und also jeweils nacheinander angeschaltet werden.

Wie ferner der Figur 1 zu entnehmen ist, ist die erste Fuzzy-basierte Vorrichtung 100 zweckmäßig ferner dazu ausgebildet, für jedes elektrische Gerät in Abhängigkeit von dessen aktuellen Energieverbrauch und einem dazugehörenden Kritikalitätsmaß den zugehörenden Prioritätswert zu ermitteln.

Das Kritikalitätsmaß gibt ein Maß an, das widerspiegelt, wie kritisch der Betrieb des elektrischen Geräts ist und fließt somit zweckmäßig in der Berechnung eines Prioritätswertes gewichtend ein. Ein hohes Kritikalitätsmaß verringert somit zweckmäßig den Prioritätswert.

Das Maß für die Kritikalität ist ferner bevorzugt in Abhängigkeit von einem gerätespezifischen Aktivitätswert, einem gerätespezifischen Kontaktwert und/oder einem gerätespezifischen Sicherheitsrelevanzwert zu ermitteln.

Auch die Aktivität ist hierbei eine gerätespezifische, linguistische Variable, die die Art und Weise des Gerätebetriebs beschreibt. Ein Wert für die Aktivität kann somit je nach elektrischem Gerät von diesem selbst übermittelt werden oder kann durch einen entsprechenden Aktivitätssensor 11-1 innerhalb der Anschaltgruppe 1-1 ermittelt werden. Für eine Waschmaschine wären dies beispielsweise Hauptwaschgang, Schonwaschgang, Schleudern usw., im Falle eines Kühlschranks als elektrisches Gerät wäre dies beispielsweise eine Hochkühlphase oder eine Temperaturhaltephase.

Zur Fuzzy-basierten Verarbeitung eines Wertes für die Aktivität sind folglich in der Fuzzy-basierten Vorrichtung 100 zur Beschreibung der linguistischen Variablen "Aktivität" wiederum den elektrischen Geräten zugeordnete Fuzzy-Sets z.B. gemäß Figur 4 hinterlegt, auf welche die die Fuzzy-basierte Verarbeitung durchführenden Einrichtungen des Fuzzy-Reglers 100 entsprechend der internen Reglerverschaltung zurückgreifen können.

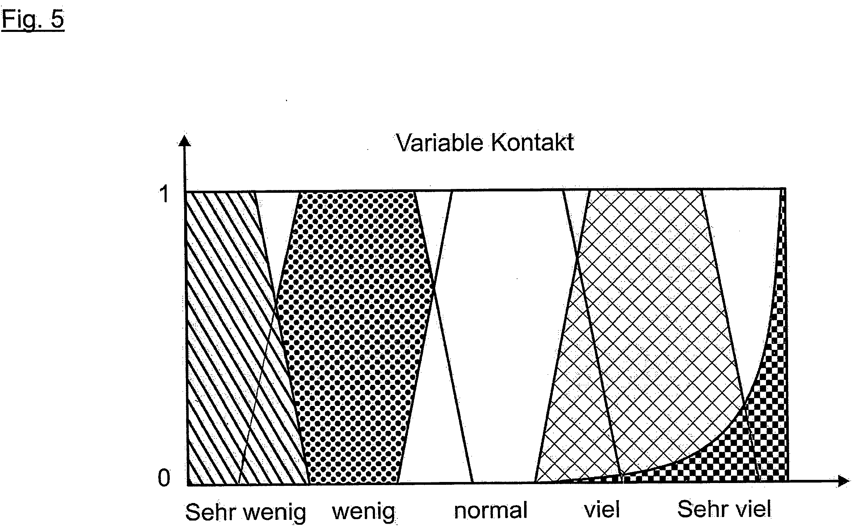

Ebenso ist der Kontaktwert erfindungsgemäß als eine gerätespezifische, linguistische Variable beschrieben, die angibt, wie ein Nutzer das Gerät betreibt, im Falle eines Kühlschranks als elektrisches Gerät beispielsweise, wie oft die Kühlschranktür aufgemacht wird bzw. auf ist. Auch hierfür kann ein entsprechender Kontaktsensor 12-1 in der Anschalteinrichtung 1-1 vorgesehen sein und zur Fuzzy-basierten Verarbeitung eines Wertes für die Aktivität sind folglich in der Fuzzy-basierten Vorrichtung 100 zur Beschreibung der linguistischen Variablen "Kontakt" ebenso den elektrischen Geräten zugeordnete Fuzzy-Sets z.B. gemäß Figur 5 hinterlegt, auf welche die die Fuzzy-basierte Verarbeitung durchführenden Einrichtungen des Fuzzy-Reglers 100 entsprechend der internen Reglerverschaltung zurückgreifen können.

Gleichermaßen ist eine gerätespezifische Sicherheitsrelevanz erfindungsgemäß als eine gerätespezifische, linguistische Variable beschrieben, und ist beispielsweise im Falle eines Bewegungsmelders erfassbar, kann jedoch auch im Fall eines Kühlschranks als elektrisches Gerät erfassbar sein, beispielsweise in Bezug auf eine Temperaturüberwachung. Mit anderen Worten stellt die Sicherheitsrelevanz eine Variable dar, die die Relevanz einer Aktivität eines elektrischen Gerätes in Bezug auf eine bestimmte Sicherheit (z. B. in Bezug auf Gesundheit, Sicherheit und Leben des Nutzers) beschreibt. So haben z.B. Sicherheitssysteme, wie beispielsweise eine Überwachungskamera, in der Regel eine hohe Sicherheitsrelevanz.

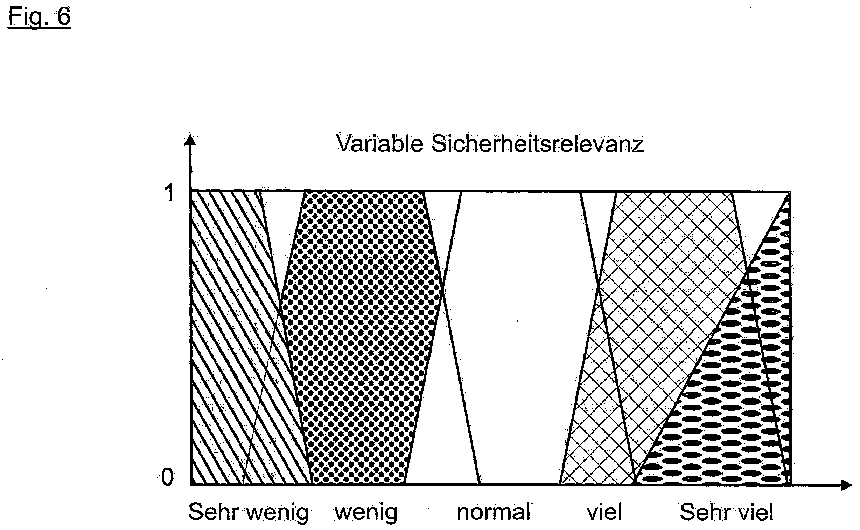

Zur Fuzzy-basierten Verarbeitung eines Wertes für die Sicherheitsrelevanz sind folglich in der Fuzzy-basierten Vorrichtung 100 zur Beschreibung der linguistischen Variablen "Sicherheitsrelevanz" ebenso den elektrischen Geräten zugeordnete Fuzzy-Sets z.B. gemäß Figur 6 hinterlegt, auf welche die die Fuzzy-basierte Verarbeitung durchführenden Einrichtungen des Fuzzy-Reglers 100 entsprechend der internen Reglerverschaltung zurückgreifen können.

Zweckmäßig wird somit das Kritikalitätsmaß eines jeweiligen elektrischen Geräts parallel zum fuzzyfizierten Verbrauchswert dieses jeweiligen elektrischen Geräts der Inferenzeinrichtung 115-1 der ersten Fuzzy-basierten Vorrichtung 100 zugeführt, so dass auf beiden Größen basierend die Regeln für die Berechnung der Ausgabe festgelegt werden und letztendlich der defuzzyfizierte Prioritätswert 101-1 von der Defuzzifizierungseinrichtung 116-1 bestimmt und ausgegeben wird. Wird das Kritikalitätsmaß, wie vorstehend beschrieben, auf einem Aktivitätswert, einem Kontaktwert und/oder Sicherheitsrelevanzwert basierend ermittelt, so erfolgt zweckmäßig jeweils eine Fuzzyfizierung der entsprechenden Werte in den Fuzzyfizierungseinrichtungen 110-1, 111-1 und/oder 112-1, welche daraufhin die fuzzyfizierten Werte einer Inferenzeinrichtung 114-1 übergeben, die als Ausgangsgröße das Maß für die Kritikalität an die Inferenzeinrichtung 115-1 übergibt.

Ferner ist, wie der Figur 2 zu entnehmen, die zweite Fuzzy-basierte Vorrichtung 200 zweckmäßig überdies dazu ausgebildet, für jedes ausgewählte elektrische Gerät in Abhängigkeit von einem Relevanzmaß, dem aktuellen Energieverbrauch, dem aktuellen Gesamtenergieverbrauch und dem Prioritätswert den Stellwert zu ermitteln.

Das Relevanzmaß gibt ein Maß an, das widerspiegelt, wie relevant der Betrieb bzw. der Einfluss des elektrischen Geräts auf eine bestimmte Zielfunktion ist und fließt somit zweckmäßig in der Berechnung des Stellwertes gewichtend ein. Diese Zielfunktion kann beispielsweise die Einhaltung des Schwellwertes sein.

Das Maß für die Relevanz wird bevorzugt in Abhängigkeit von der aktuellen Zeit, dem gerätespezifischen Aktivitätswert und/oder einer gerätespezifische Nutzungsdauer ermittelt.

Auch hierfür ist wiederum beispielhaft für das elektrische Gerät 10-1 ein Aktivitätssensor 21-1 vorgesehen, der zu dem in Figur 1 beschriebenen Aktivitätssensor 11-1 identisch sein kann oder auch diesem entsprechen kann, so dass diesbezüglich insofern auf die Ausführungen zu Fig. 1 verwiesen wird. Ferner wird mittels eines Messgeräts 22-1 die Nutzungsdauer des elektrischen Gerätes 10-1 gemessen und ferner ist an alle Kanäle ein Zeitgeber 25 angeschaltet.

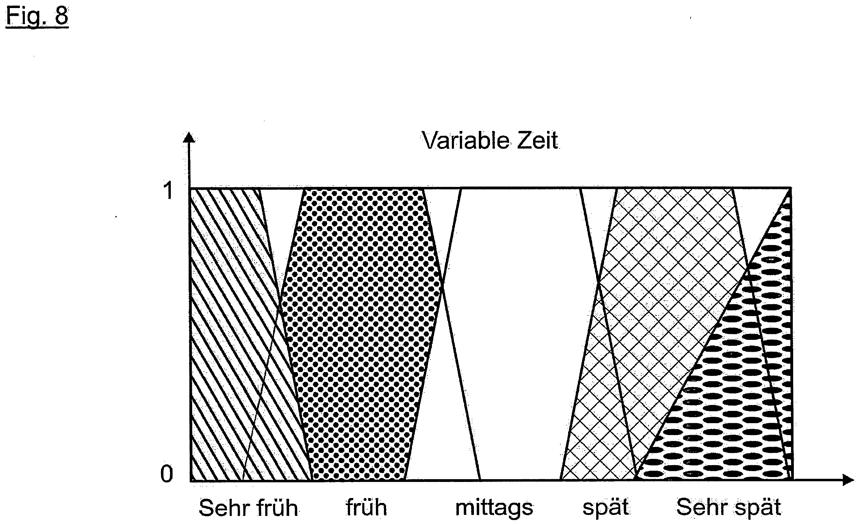

Da erfindungsgemäß auch hierbei die Aktivität, die Nutzungsdauer und die Zeit als linguistische Variable beschrieben sind, sind zur Fuzzy-basierten Verarbeitung jeweils für die Aktivität, die Nutzungsdauer und die Zeit erhaltener Werte folglich in der Fuzzy-basierten Vorrichtung 200 zur Beschreibung dieser linguistischen Variablen entsprechend zugeordnete Fuzzy-Sets z.B. gemäß Figur 4 in Bezug auf die Aktivität oder gemäß Figur 8 in Bezug auf die Zeit hinterlegt, auf welche die die Fuzzy-basierte Verarbeitung durchführenden Einrichtungen des Fuzzy-Reglers 200 entsprechend der internen Reglerverschaltung zurückgreifen können.

Zweckmäßig wird somit das Relevanzmaß eines jeweiligen elektrischen Geräts parallel zum fuzzyfizierten Verbrauchswert dieses jeweiligen elektrischen Geräts, zum fuzzyfizierten Gesamtverbrauchswert und zum fuzzyfizierten Prioritätswert der Inferenzeinrichtung 216-1 der zweiten Fuzzy-basierten Vorrichtung 200 zugeführt, so dass auf diesen Größen basierend die Regeln für die Berechnung der Ausgabe festgelegt werden und letztendlich der defuzzyfizierte Stellwert 201-1 von der Defuzzifizierungseinrichtung 217-1 bestimmt und ausgegeben wird.

Wird das Relevanzmaß, wie vorstehend beschrieben, auf einem aktuellen Zeitwert, einem gerätespezifischen Aktivitätswert und/oder einem gerätespezifischen Nutzungsdauerwert basierend ermittelt, so erfolgt zweckmäßig jeweils eine Fuzzyfizierung der entsprechenden Werte in den Fuzzyfizierungseinrichtungen 214-1, 210-1 und/oder 211-1, welche daraufhin die fuzzyfizierten Werte einer Inferenzeinrichtung 215-1 übergeben, die als Ausgangsgröße das Maß für die Relevanz an die Inferenzeinrichtung 216-1 übergibt.

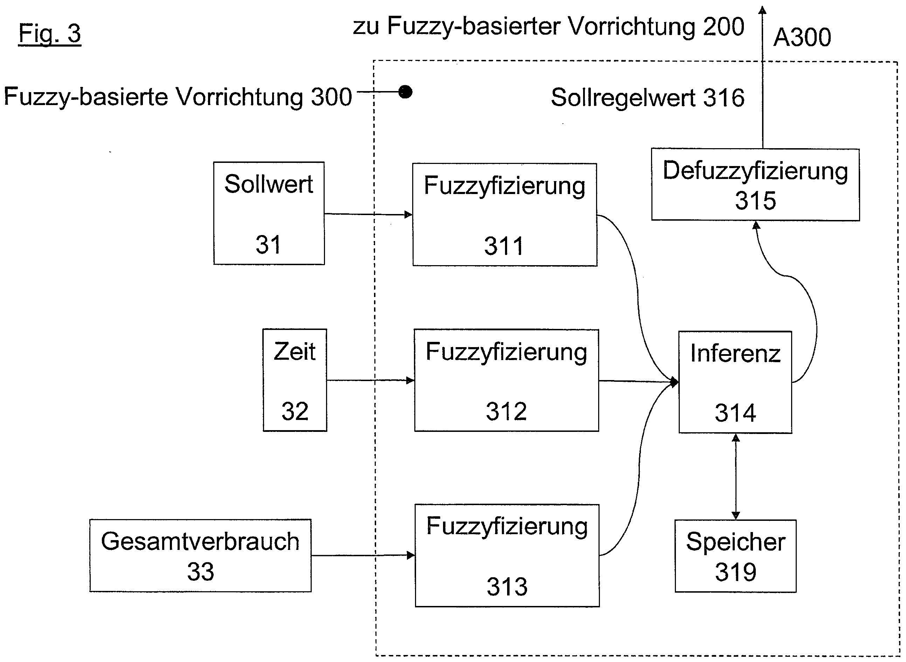

Wie der Figur 2 aber auch der Figur 3 ferner zu entnehmen, weist eine besonders bevorzugte Ausführungsform eines erfindungsgemäßen Fuzzy-Regelsystems eine dritte Fuzzy-basierte Vorrichtung 300 auf, die einen Sollregelwert 316 bestimmt, und zwar in Abhängigkeit von einem bestimmten Sollwert, von der aktuellen Zeit und dem aktuellen Gesamtenergieverbrauch. Dieser Sollregelwert 316 wird der zweiten Fuzzy-basierten Vorrichtung 200 übergeben.

Die zweite Fuzzy-basierte Einrichtung 200 ist hierbei derart ausgebildet, für das ausgewählte elektrische Gerät nicht nur in Abhängigkeit von dem dazugehörenden Prioritätswert, von dessen aktuellen Energieverbrauch, dem aktuellen Gesamtenergieverbrauch der Gruppe, sondern auch in Abhängigkeit des Sollregelwertes den Stellwert zu ermitteln, der sicherstellt, dass der Gesamtenergieverbrauch den einstellbaren Schwellwert nicht überschreitet.

Ist die dritte Fuzzy-basierte Vorrichtung wiederum als separater Fuzzy-Regler 300 ausgebildet, stellt der Sollregelwert 316 die am Ausgang A300 anliegende Ausgangsgröße der dritten Fuzzy-basierten Vorrichtung dar, so dass folglich eine als separater Fuzzy-Regler ausgebildete dritte Fuzzy-basierte Vorrichtung 300 ausgangsseitig mit der zweiten Fuzzy-basierten Vorrichtung 200 verbunden ist. Der von der dritten Fuzzy-basierten Vorrichtung 300 bestimmte Sollregelwert 316 wird zweckmäßig gemäß Figur 2 zunächst einer Fuzzyfizierungseinrichtung 220-1 und anschließend ebenfalls der Inferenzeinrichtung 216-1 zugeführt. Je nach interner spezifischer Ausgestaltung der zweiten Fuzzy-basierten Vorrichtung 200 kann der von der dritten Fuzzy-basierten Vorrichtung 300 bestimmte Sollregelwert 316 gegebenenfalls auch direkt der Inferenzeinrichtung 216-1 zugeführt werden.

Zur Erfassung der aktuellen Zeit und des aktuellen Gesamtenergieverbrauchs der Gruppe, ist der dritten Fuzzy-basierten Einrichtung 300 wiederum eine Zeitgebereinrichtung 32 und eine Gesamtverbrauchsmesseinrichtung 33 vorgeschaltet, die dem Zeitgeber 25 und dem Gesamtverbrauchsmesser 24 gemäß Figur 2 entsprechen können, auch separate, jedoch entsprechend arbeitende Einrichtungen sein können.

Mit dem Sollwert kann Einfluss auf eine innere Dynamik des erfindungsgemäßen Fuzzy-Regelsystems genommen werden. So kann der Sollwert beispielsweise ein Wert zwischen 1 und 10 sein, und stellt ebenfalls eine linguistische Variable dar, deren Fuzzy-Sets dann in Klassen "sehr früh" bis "sehr spät" beispielsweise eingeteilt sind. Der Sollwert wird über den Sollwertgeber 31, die aktuelle Zeit über den Zeitgeber 32 und der gemessene Gesamtenergieverbrauch der Gruppe über den Gesamtverbrauchsmesser 33 der dritten Fuzzy-basierten Einrichtung 300 und in dieser einer Fuzzyfizierungs-Einrichtung 311, 312 bzw. 313 zugeführt und deren fuzzyfizierte Ausgangsgrößen einer Inferenzeinrichtung 314, deren ermittelte Ausgangsgröße daraufhin einer Defuzzyfizierungseinrichtung 315 zur Berechnung eines defuzzyfizierten Sollregelwertes zugeführt wird.

Die Fuzzy-basierte Einrichtung 300 kann also einkanalig aufgebaut sein, da der berechnete Sollregelwert 360 sich auf die Dynamik der Regelung in Bezug auf die gesamte Gruppe von elektrischen Geräten bezieht und also gemäß Figur 2 jedem Kanal der zweiten Fuzzy-basierten Einrichtung 200 übergeben wird. Ist beispielsweise ein Sollwert von 10 vorgegeben, welches ein sehr spätes dynamisches Eingreifen des Regelsystems bestimmt, kann beispielsweise der berechnete Sollregelwert 316 "8" betragen, so dass der zusätzlich in Abhängigkeit des Sollregelwertes 360 ermittelte Stellwert 201-1 bis 201-N in jedem Fall ein rechtzeitiges und sicheres Ansteuern des ausgewählten Gerätes gewährleistet und beispielsweise über die Stellgröße 201-1 das ausgewählte Gerät 10-1 rechtzeitig in eine Zeitphase mit geringem Gesamtenergieverbrauch verschoben werden kann.

In weiterer besonders zweckmäßiger Ausgestaltung weist die zweite und/oder die dritte Fuzzy-basierte Vorrichtung 200 bzw. 300 zumindest einen Speicher 219, 319 auf, in welchem vorbestimmte zeitliche Nutzungsprofile gespeichert sind, wobei dann die zweite bzw. dritte Fuzzy-basierte Vorrichtung zweckmäßig dafür ausgebildet ist, unter Ansprechen auf den zu vorbestimmten Zeitpunkten ermittelten Gesamtenergieverbrauch ein vorbestimmtes Nutzungsprofil zu erkennen.

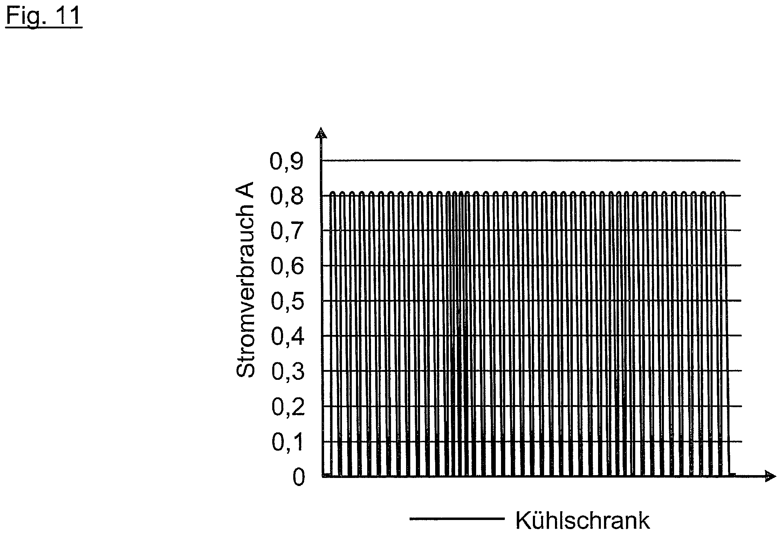

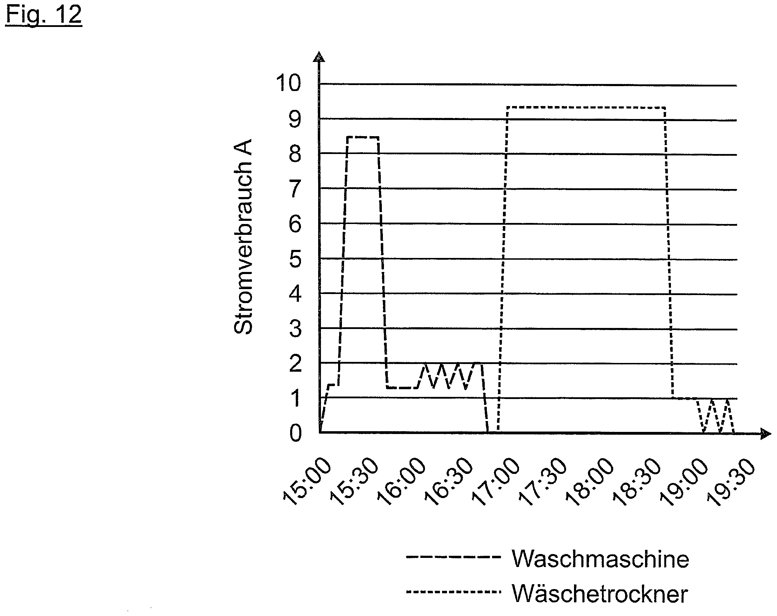

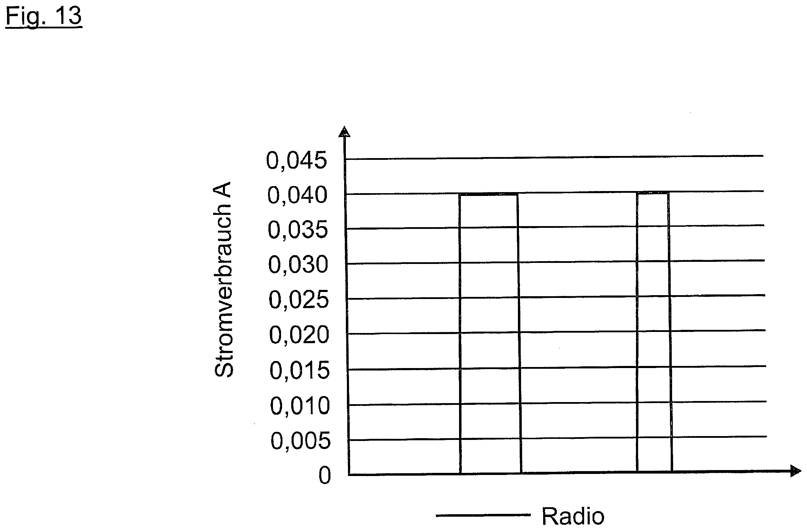

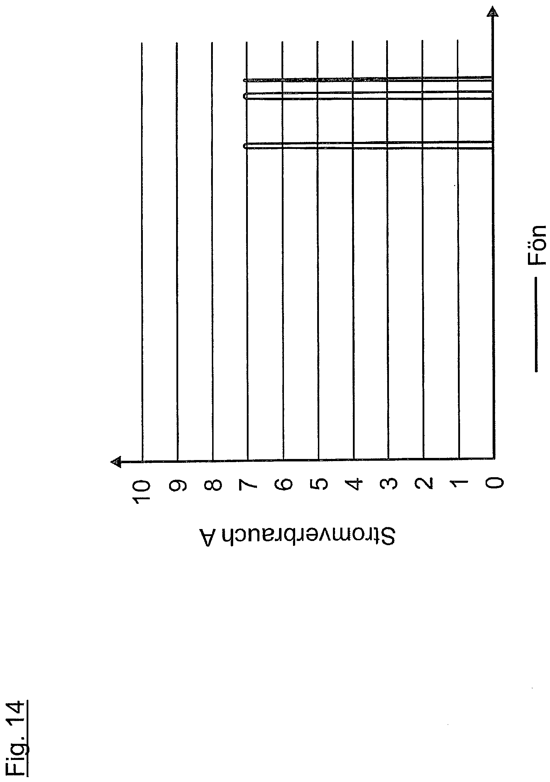

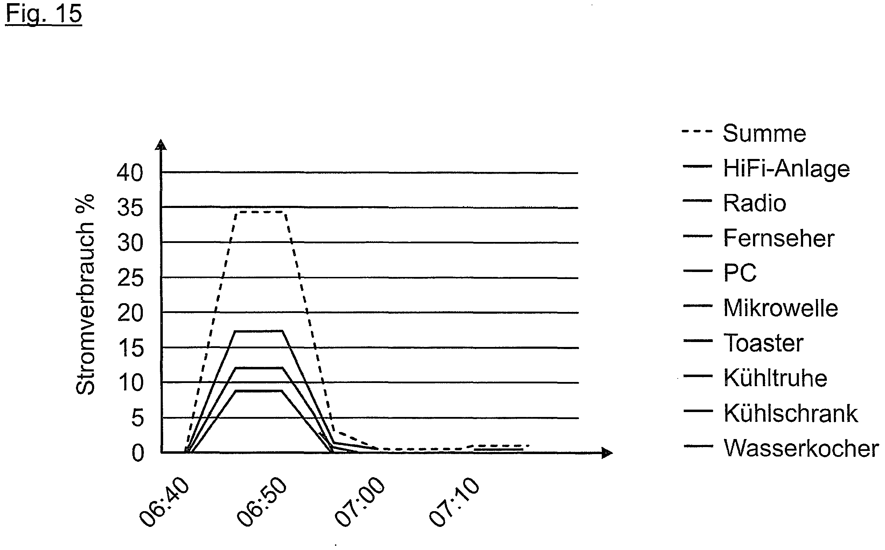

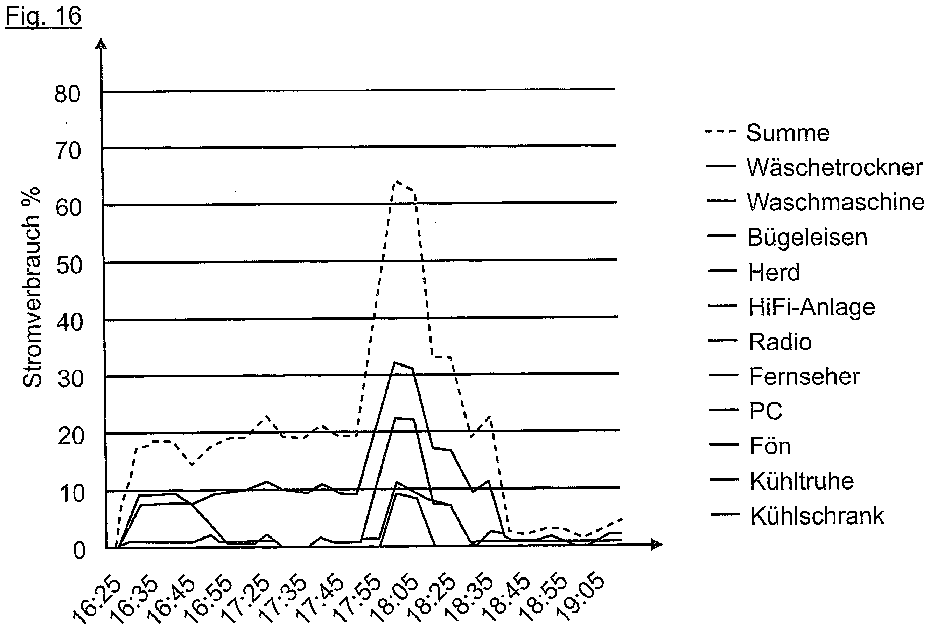

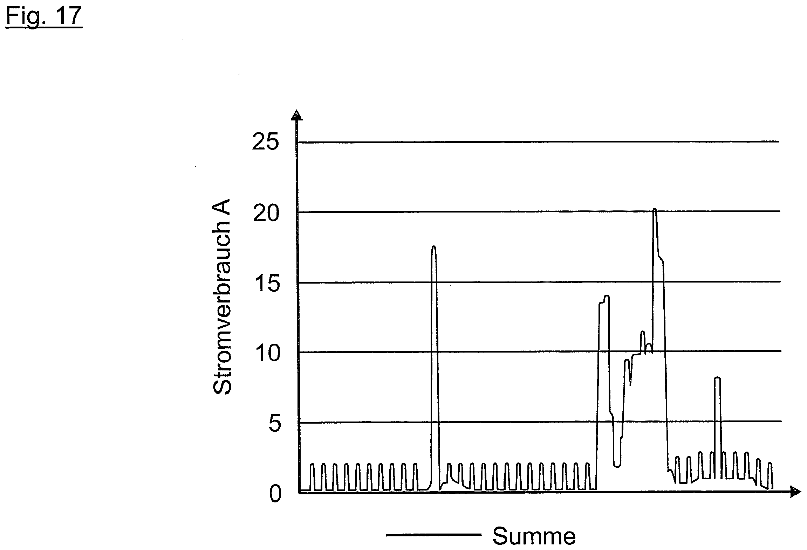

Bei Figur 2 ist beispielhaft ein solcher Speicher 219 an die Inferenzeinrichtungen 215-1 und 216- angeschaltet und bei der Figur 3 ein Speicher 319 beispielhaft an die Inferenzeinrichtung 314. Die in den Speichern abgelegten Nutzungsprofile können verschiedene Szenarien bzw. verschiedene zeitliche Abläufe für den Gesamtenergieverbrauch darstellen, und z.B. einen Gesamtenergieverbrauch über das Wochenende, über eine Urlaubszeit, oder einen bestimmten Tageszeitraum, bei einer Party oder während des normalen Alltags widerspiegeln. Diese Werte können auf Messungen oder auch auf Trendanalysen beruhen und spiegeln, beispielsweise im Falle eines Urlaubsszenario einen geringeren Gesamtenergieverbrauch wider, da im Regelfall das Eisfach abgetaut ist oder im Falle einer Party, dass ein erhöhter Gesamtenergieverbrauch des Kühlschrankes aufgrund ständig zu kühlenden Bieres vonnöten ist. Solche Nutzungsprofile können z.B. gemäß den Figur 11 bis 16, welche beispielhafte Energieverbrauchsverläufe über die Zeit anhand beispielhafter elektrischer Geräte darstellen, und/oder gemäß Fig. 17, welche einen beispielhaften Gesamtenergieverbrauch mehrerer elektrischer Geräte, welche eine Gruppe bilden, über die Zeit darstellen, abgespeichert sein.

Die zweite Fuzzy-basierte Vorrichtung 200 oder die dritte Fuzzy-basierte Vorrichtung 300 ermittelt hierbei zweckmäßig während kontinuierlichen Zeitabschnitten und also regelmäßig, d.h. zu vorbestimmten Zeitpunkten den Gesamtenergieverbrauch und gleicht diesen mit den im Speicher 219 bzw. 319 abgelegten Nutzungsprofilen ab, so dass bei Erkennen eines vorbestimmten, gespeicherten Nutzungsprofils dieses daraufhin in Bezug auf das Regelwerk der Inferenzeinrichtung 215-1, 216-1 und/oder 314 Anwendung findet.

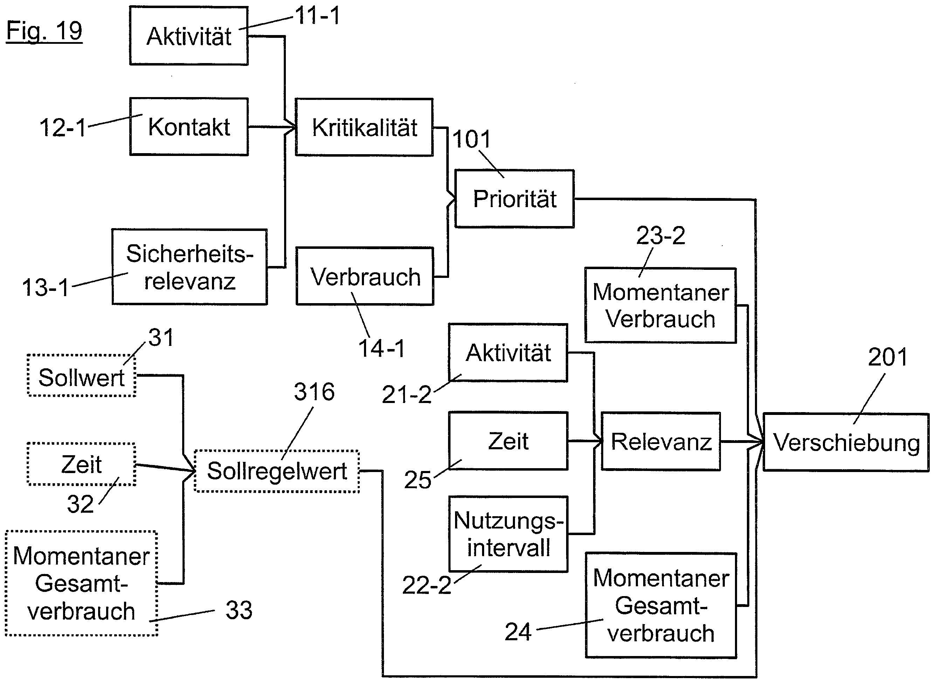

Mit dem vorstehend beschriebenen Fuzzy-Regelsystem ist somit ein erfindungsgemäßes Verfahren zur Regelung des Gesamtenergieverbrauchs mehrerer elektrischer Geräte, welche eine Gruppe bilden, durchführbar, von welchem Fig. 19 in einer Prinzipskizze ein bevorzugtes Ausführungsbeispiel zur Veranschaulichung verschiedener Ausführungsformen aufzeigt.

Demgemäß wird der aktuelle Energieverbrauch 14-1 jedes elektrischen Geräts der Gruppe gemessen, für jedes elektrische Gerät in Abhängigkeit von dessen aktuellem Energieverbrauch ein Prioritätswert 101 ermittelt, wenigstens das elektrische Gerät mit dem höchsten Prioritätswert ausgewählt und ein Stellwert 201 zumindest für das eine ausgewählte elektrische Gerät für eine zeitliche Verschiebung (Einschaltzeit, Taktung) des Betriebes des zumindest einen ausgewählten elektrischen Gerätes in Abhängigkeit von dem dazugehörenden Prioritätswert 101, von dessen aktuellem Energieverbrauch 23-2 und dem aktuellen Gesamtenergieverbrauch 24 der Gruppe derart ermittelt, dass der Gesamtenergieverbrauch der Gruppe einen einstellbaren Schwellwert nicht überschreitet.

Bevorzugt wird ferner in Abhängigkeit von einem vorbestimmten Sollwert 31, von der aktuellen Zeit 32 und dem aktuellen Gesamtenergieverbrauch 33 einen Sollregelwert 316 bestimmt, so dass für das wenigstens eine ausgewählte elektrische Gerät in Abhängigkeit von dem dazugehörenden Prioritätswert 101, von dessen aktuellem Energieverbrauch 23-2, dem aktuellen Gesamtenergieverbrauch 24 der Gruppe und dem Sollregelwert 316 der Stellwert 201 ermittelt wird.

Alternativ, insbesondere jedoch ergänzend wird ferner für jedes elektrische Gerät in Abhängigkeit von dessen aktuellem Energieverbrauch 14-1 und einem dazugehörenden Kritikalitätsmaß der Prioritätswert ermittelt, wobei bevorzugt für jedes elektrische Gerät ein Kritikalitätsmaß in Abhängigkeit von einem gerätespezifischen Aktivitätswert 11-1, einem gerätespezifischen Kontaktwert 12-1 und/oder einem gerätespezifischen Sicherheitsrelevanzwert 13-1 ermittelt wird.

Alternativ, insbesondere jedoch ergänzend wird ferner für jedes ausgewählte elektrische Gerät in Abhängigkeit von einem Relevanzmaß, dem aktuellen Energieverbrauch 23-2, dem aktuellen Gesamtenergieverbrauch 24 und dem Prioritätswert 101 der Stellwert ermittelt, wobei bevorzugt das Relevanzmaß in Abhängigkeit von der aktuellen Zeit 25, einem gerätespezifischen Aktivitätswert 21-2 und/oder einer gerätespezifischen Nutzungsdauer 22-2 ermittelt.

Besonders bevorzugt, wenn auch in Fig. 19 nicht dargestellt, werden in wenigstens einem Speicher vorbestimmte zeitliche Nutzungsprofile gespeichert, so dass unter Ansprechen auf den zu vorbestimmten Zeitpunkten ermittelten Gesamtenergieverbrauch zumindest ein vorbestimmtes Nutzungsprofil erkannt werden kann.

Zusammenfassend ermöglicht die Erfindung somit eine Optimierung des Energieverbrauches mehrerer elektrischer Geräte, insbesondere in einem Haushalt, nach verschiedenen, konkurrierenden Parametern und kann in Folge der Beschreibung von im Wesentlichen allen Eingangswerten in Art von linguistischen Variablen auch verschiedener Kommunikationsprotokolle der jeweiligen elektrischen Geräte berücksichtigen. Die Kenntnis der verschiedenen Lastparameter, die Kritikalität der einzelnen Geräte etc. ermöglicht quasi eine dynamische Orchestrierung, also ein flexibles Kombinieren und Anpassen mehrerer elektrischer Geräte in Bezug auf deren Energieverbräuche sowie in Abhängigkeit der Anforderungen und kann sich entsprechend der jeweiligen Nutzungssituation oder eines erkannten Nutzungsprofils ändern. Hierdurch lassen sich z.B. in einem intelligenten Haus der Energieverbrauch senken und Lastspitzen vermeiden.

Das flexible Kombinieren und Anpassen erfolgt in verschiedenen Stufen und wird zweckmäßig zyklisch und/oder bei Bedarf wiederholt. So kann jederzeit ein Optimum auch bei veränderten Umgebungsbedingungen erreicht werden.

Eine wesentliche Voraussetzung hierfür ist eine Fuzzy-basierte Regelung mit linguistischen Variablen, die Fuzzy Sets enthalten, die zweckmäßig vorkonfiguriert werden und für welche Beispiele in den Fig. 4 bis 10 gezeigt sind. Diese Fuzzy Sets können somit insbesondere die Form eines Dreiecks, Trapezes oder eines Kurvenstücks (vgl. auch Patentschrift DE 195 02 230 A1) annehmen.

Diese linguistischen Variablen werden in mehreren Fuzzy-Vorrichtungen miteinander verknüpft und zweckmäßig wird nur bei Bedarf in das System eingegriffen, um die Überschreitung eines gewählten Schwellwertes zu verhindern. Hierzu wird der Energieverbrauch zumindest des elektrischen Gerätes mit der höchsten Priorität in eine Phase mit geringer Last verschoben, so dass die Funktionalität für den Nutzer erhalten bleibt. Zweckmäßig werden hierzu ferner Nutzungsprofile erstellt und abgespeichert, welche z.B. den Energieverbrauch pro Zeit protokollieren und damit typische Lastspitzen voraussagen können.

Im Besonderen wird das Gerät mit der höchsten Priorität und also z.B. gemäß besonders bevorzugter Ausführungsform mit dem höchsten momentanen Energieverbrauch jedoch mit der geringsten Kritikalität ausgewählt, Beispiele hierfür sind: Kühlschrank, Heizung, Waschmaschine, Klimaanlage, Tiefkühltruhe, Geschirrspüler, Lüftungsanlage, etc. Auch der Backofen kann für die Verbrauchsregulierung genutzt werden, da er nicht kontinuierlich heizt und demzufolge keinen kontinuierlichen Stromverbrauch hat und ein Absinken der Temperatur um 5°C weder Kuchen noch Braten verdirbt. Ideal für die Verbrauchsregulierung sind Geräte mit hohem periodischem Energieverbrauch wie Kühltruhe, Kühlschrank, Heizung etc.

Daraufhin wird die Dauer der Verschiebung, bzw. die Taktung des ausgewählten Gerätes bzw. der ausgewählten Geräte in Phasen mit geringem Energieverbrauch bestimmt, um die Überschreitung des Schwellwertes zu vermeiden. Der Energieverbrauch der einzelnen Geräte wird mit linguistischen Variablen beschrieben, wobei die Werte auf Messungen und Trendanalysen beruhen können. Der Gesamtenergieverbrauch wird ebenfalls in einer linguistischen Variablen beschrieben.

Die Erfindung ermöglicht somit eine automatische, adaptive Regelung des Energieverbrauches auf Grundlage der momentanen Verbrauchswerte, insbesondere innerhalb einer intelligenten Haussteuerung, bei welcher die Regelung für verschiedene wiederkehrende Szenarien optimiert werden kann und zweckmäßig nur dann regulierend eingreift, wenn die Zielfunktion, also z.B. den Schwellwert nicht zu überschreiten, nicht erfüllt werden kann.

Da davon ausgegangen werden kann, dass das reale System meistens die Zielfunktion ohne Regelung erfüllt, wird bevorzugt nur in Fällen einer zu erwartenden Überlast (Überschreiten des gewünschten maximalen Energieverbrauches, vgl. z.B. Fig. 18) regelnd in das System eingegriffen. Das reale System wird ständig still beobachtet. Die Messwerte werden statistisch ausgewertet und bevorzugt verschiedenen Szenarien zugeordnet. Hierbei können die Nutzer das System ferner durch weitere Zielvorgaben unterstützen.

Sobald Abweichungen der aktuellen Messwerte zu den zweckmäßig im Fuzzy-Regelsystem hinterlegten Werten erkannt werden, wird der Regler entsprechend angepasst. Hierfür werden verschiedene Szenarien (Nutzungsprofile) bereitgestellt um die Adaption schnell durchführen zu können.

## Patentansprüche

1. Verfahren zur Fuzzy-basierten Regelung des Gesamtenergieverbrauchs mehrerer elektrischer Geräte, die eine Gruppe bilden, mit folgenden Schritten:
- Messen des aktuellen Energieverbrauchs (32-1) jedes elektrischen Geräts (10-1,...10-N) der Gruppe;
- Ermitteln für jedes elektrische Gerät (10-1,...10-N) in Abhängigkeit von dessen aktuellem Energieverbrauch einen Prioritätswert (101-1,...101-N);
- Auswählen wenigstens des elektrischen Geräts mit dem höchsten Prioritätswert;
- Ermitteln eines Stellwerts (201-1,...201-N) zumindest für das eine ausgewählte elektrische Gerät in Abhängigkeit von dem dazugehörenden Prioritätswert, von dessen aktuellem Energieverbrauch und dem aktuellen Gesamtenergieverbrauch der Gruppe, derart, dass der Gesamtenergieverbrauch der Gruppe einen einstellbaren Schwellwert nicht überschreitet.

2. Fuzzy-Regelsystem zur Regelung des Gesamtenergieverbrauchs mehrerer elektrischer Geräte, welche eine Gruppe bilden, mit
einer ersten Fuzzy-basierten Vorrichtung (100), die dazu ausgebildet ist, für jedes elektrische Gerät (10-1,...10-N) in Abhängigkeit von dessen aktuellem Energieverbrauch einen Prioritätswert zu ermitteln und wenigstens das elektrische Gerät mit dem höchsten Prioritätswert auszuwählen,
einer zweiten Fuzzy-basierten Vorrichtung (200), die dazu ausgebildet ist, zumindest für das eine ausgewählte elektrische Gerät in Abhängigkeit von dem dazugehörenden Prioritätswert, von dessen aktuellem Energieverbrauch und dem aktuellen Gesamtenergieverbrauch der Gruppe einen Stellwert (201-1,...201-N) zu ermitteln, derart, dass der Gesamtenergieverbrauch der Gruppe einen einstellbaren Schwellwert nicht überschreitet.

3. Fuzzy-Regelsystem nach vorstehendem Anspruch,
**dadurch gekennzeichnet, dass**
die zweite Fuzzy-basierten Vorrichtung (200) einen Speicher (219) aufweist, in welchem vorbestimmte zeitliche Nutzungsprofile gespeichert sind, wobei die zweite Fuzzy-basierte Vorrichtung (200) dazu ausgebildet ist, unter Ansprechen auf den zu vorbestimmten Zeitpunkten ermittelten Gesamtenergieverbrauch ein vorbestimmtes Nutzungsprofil zu erkennen.

4. Fuzzy-Regelsystem nach Anspruch 2 oder 3, **gekennzeichnet durch**
eine dritte Fuzzy-basierte Vorrichtung (300), die dazu ausgebildet ist, in Abhängigkeit von einem vorbestimmten Sollwert, von der aktuellen Zeit und dem aktuellen Gesamtenergieverbrauch einen Sollregelwert zu bestimmen, wobei
die zweite Fuzzy-basierte Vorrichtung dazu ausgebildet ist, für das ausgewählte elektrische Gerät in Abhängigkeit von dem dazugehörenden Prioritätswert, von dessen aktuellem Energieverbrauch, dem aktuellen Gesamtenergieverbrauch der Gruppe und dem Sollregelwert den Stellwert zu ermitteln.

5. Fuzzy-Regelsystem nach vorstehendem Anspruch,
**dadurch gekennzeichnet, dass**
die dritte Fuzzy-basierten Vorrichtung (300) einen Speicher (219) aufweist, in welchem vorbestimmte zeitliche Nutzungsprofile gespeichert sind, wobei die dritte Fuzzy-basierte Vorrichtung (300) dazu ausgebildet ist, unter Ansprechen auf den zu vorbestimmten Zeitpunkten ermittelten Gesamtenergieverbrauch ein vorbestimmtes Nutzungsprofil zu erkennen.

6. Fuzzy-Regelsystem nach einem der vorstehenden Ansprüche 2 bis 5, wobei die erste Fuzzy-basierte Vorrichtung (100) als ein erster Fuzzy-Regler (100) ausgebildet ist, und die zweite Fuzzy-basierte Vorrichtung (200) als zweiter, mit dem Ausgang des ersten Fuzzy-Reglers (100) verbundener Fuzzy-Regler ausgebildet ist.

7. Fuzzy-Regelsystem nach einem der vorstehenden Ansprüche 4 oder 5, wobei die erste Fuzzy-basierte Vorrichtung (100) als ein erster Fuzzy-Regler (100), die zweite Fuzzy-basierte Vorrichtung (200) als ein zweiter Fuzzy-Regler (200) und die dritte Fuzzy-basierte Vorrichtung (300) als ein dritter Fuzzy-Regler (300) ausgebildet sind, wobei der zweite Fuzzy-Reglers (200) mit dem Ausgang des ersten Fuzzy-Reglers (100) und mit dem Ausgang des dritten Fuzzy-Reglers (300) verbunden ist,

8. Fuzzy-Regelsystem nach einem der vorstehenden Ansprüche 2 bis 7,
**dadurch gekennzeichnet, dass**
die erste Fuzzy-basierte Vorrichtung (100) dazu ausgebildet ist, für jedes elektrische Gerät in Abhängigkeit von dessen aktuellem Energieverbrauch und einem dazugehörenden Kritikalitätsmaß den Prioritätswert zu ermitteln.

9. Fuzzy-Regelsystem nach vorstehendem Anspruch,
**dadurch gekennzeichnet, dass**
die erste Fuzzy-basierte Vorrichtung (100) dazu ausgebildet ist, für jedes elektrische Gerät ein Kritikalitätsmaß in Abhängigkeit von einem gerätespezifischen Aktivitätswert,
einem gerätespezifischen Kontaktwert und/oder einem gerätespezifischen Sicherheitsrelevanzwert zu ermitteln.

10. Fuzzy-Regelsystem nach einem der vorstehenden Ansprüche 2 bis 9,
**dadurch gekennzeichnet, dass**
die zweite Fuzzy-basierte Vorrichtung (200) dazu ausgebildet ist, für jedes ausgewählte elektrische Gerät in Abhängigkeit von ein Relevanzmaß, dem aktuellen Energieverbrauch, dem aktuellen Gesamtenergieverbrauch und dem Prioritätswert den Stellwert zu ermitteln,

11. Fuzzy-Regelsystem nach vorstehendem Anspruch,
**dadurch gekennzeichnet, dass**
die zweite Fuzzy-basierte Vorrichtung (200) dazu ausgebildet ist, das Relevanzmaß in Abhängigkeit von der aktuellen Zeit, einem gerätespezifischen Aktivitätswert und/oder einer gerätespezifischen Nutzungsdauer zu ermitteln,

## Claims

1. A method for fuzzy logic based control of the total energy consumption of a plurality of electrical appliances that form a group, comprising the steps of:
- measuring the current power consumption (32-1) of each electrical appliance (10-1, ... 10-N) of the group;
- determining, for each electrical appliance (10-1, ... 10-N), a priority value (101-1, ... 101-N) as a function of its current energy consumption;
- selecting at least the electrical appliance having the highest priority value;
- determining a control value (201-1, ... 201-N) at least for the one selected electrical appliance as a function of its associated priority value, its current energy consumption and the current total energy consumption of the group such that the total energy consumption of the group does not exceed an adjustable threshold value.

2. A fuzzy logic control system for controlling the total energy consumption of a plurality of electrical appliances that form a group, comprising
a first fuzzy logic based device (100), adapted to determine a priority value for each electrical appliance (10-1, ... 10-N) as a function of the current energy consumption thereof, and to select at least the electrical appliance having the highest priority value;
a second fuzzy logic based device (200) that is adapted to determine a control value (201-1, ... 201-N) at least for the one selected electrical appliance as a function of the associated priority value thereof, the current energy consumption thereof and the current total energy consumption of the group such that the total energy consumption of the group does not exceed an adjustable threshold value.

3. The fuzzy logic control system according to the preceding claim, **characterised in that** the second fuzzy logic based device (200) has a memory (219) which stores predetermined temporal usage profiles, the second fuzzy logic based device (200) being adapted to identify a predetermined usage profile in response to the total energy consumption determined at predetermined points in time.

4. The fuzzy logic control system according to claim 2 or 3, **characterised by**
a third fuzzy logic based device (300) that is adapted to determine a target control value as a function of a predetermined target value, the current time and the current total energy consumption; wherein
the second fuzzy logic based device is adapted to determine, for the selected electrical appliance, the control value as a function of the associated priority value thereof, the current energy consumption thereof, the current total energy consumption of the group and the target control value.

5. The fuzzy logic control system according to the preceding claim, **characterised in that** the third fuzzy logic based device (300) has a memory (219) which stores predetermined temporal usage profiles, the third fuzzy logic based device (300) being adapted to identify a predetermined usage profile in response to the total energy consumption determined at predetermined points in time.

6. The fuzzy logic control system according to any one of the preceding claims 2 to 5, wherein the first fuzzy logic based device (100) is configured as a first fuzzy logic controller (100), and the second fuzzy logic based device (200) is configured as a second fuzzy logic controller which is connected to the output of the first fuzzy logic controller (100).

7. The fuzzy logic control system according to any one of the preceding claims 4 or 5, wherein the first fuzzy logic based device (100) is configured as a first fuzzy logic controller (100), the second fuzzy logic based device (200) as a second fuzzy logic controller (200) and the third fuzzy logic based device (300) as a third fuzzy logic controller (300), wherein the second fuzzy logic controller (200) is connected to the output of the first fuzzy logic controller (100) and to the output of the third fuzzy logic controller (300).

8. The fuzzy logic control system according to any one of the preceding claims 2 to 7, **characterised in that** the first fuzzy logic based device (100) is adapted to determine, for each electrical appliance, the priority value as a function of the current energy consumption thereof and an associated measure of criticality.

9. The fuzzy logic control system according to the preceding claim, **characterised in that** the first fuzzy logic based device (100) is adapted to determine, for each electrical appliance, a measure of criticality as a function of a device-specific activity value, a device-specific contact value and/or a device-specific safety relevance value.

10. The fuzzy logic control system according to any one of the preceding claims 2 to 9, **characterised in that** the second fuzzy logic based device (200) is adapted to determine, for each selected electrical appliance, the control value as a function of a measure of relevance, the current energy consumption, the current total energy consumption and the priority value.

11. The fuzzy logic control system according to the preceding claim, **characterised in that** the second fuzzy logic based device (200) is adapted to determine the measure of relevance as a function of the current time, a device-specific activity value and/or a device-specific usage time.

## Revendications

1. Procédé de régulation, basée sur la logique floue, de la consommation totale d'énergie de plusieurs appareils électriques qui forment un groupe, comprenant les étapes suivantes :
- mesurer la consommation d'énergie actuelle (32-1) de chaque appareil électrique (10-1, ...10-N) du groupe ;
- déterminer une valeur de priorité (101-1, ...101-N) pour chaque appareil électrique (10-1, ...10-N) en fonction de la consommation d'énergie actuelle de celui-ci ;
- sélectionner au moins l'appareil électrique présentant la valeur de priorité la plus élevée ;
- déterminer une valeur de réglage (201-1, ...201-N) au moins pour l'un des appareils électriques sélectionné en fonction de la valeur de priorité associée à celui-ci, de la consommation d'énergie actuelle dudit appareil et de la consommation totale d'énergie actuelle du groupe, de telle sorte que la consommation totale d'énergie du groupe ne passe pas au-dessus d'une valeur seuil réglable.

2. Système de régulation à logique floue pour la régulation de la consommation totale d'énergie de plusieurs appareils électriques, lesquels forment un groupe, pourvu d'un premier dispositif basé sur la logique floue (100), qui est conçu pour déterminer une valeur de priorité pour chaque appareil électrique (10-1, ...10-N) en fonction de sa consommation d'énergie actuelle, et pour sélectionner au moins l'appareil électrique présentant la valeur de priorité la plus élevée, d'un deuxième dispositif basé sur la logique floue (200), qui est conçu pour déterminer une valeur de réglage (201-1, ...201-N) au moins pour l'un des appareils électriques sélectionnés en fonction de la valeur de priorité associée à celui-ci, de sa consommation d'énergie actuelle et de la consommation totale d'énergie actuelle du groupe, de telle sorte que la consommation totale d'énergie du groupe ne passe pas au-dessus d'une valeur seuil réglable.

3. Système de régulation à logique floue selon la revendication précédente, **caractérisé en ce que**
le deuxième dispositif basé sur la logique floue (200) présente une mémoire (219) dans laquelle sont mis en mémoire des profils d'utilisation temporelle prédéfinis, où le deuxième dispositif basé sur la logique floue (200) est conçu pour reconnaître un profil d'utilisation prédéfini en réponse à la consommation totale d'énergie déterminée à des moments prédéfinis.

4. Système de régulation à logique floue selon la revendication 2 ou 3, **caractérisé par**
un troisième dispositif basé sur la logique floue (300), qui est conçu pour déterminer une valeur de régulation théorique en fonction d'une valeur théorique prédéfinie, du temps actuel et de la consommation totale d'énergie actuelle,
dans lequel
le deuxième dispositif basé sur la logique floue est conçu pour déterminer la valeur de réglage pour l'appareil électrique sélectionné en fonction de la valeur de priorité associée à celui-ci, de sa consommation d'énergie actuelle, de la consommation totale d'énergie actuelle du groupe et de la valeur de régulation théorique.

5. Système de régulation à logique floue selon la revendication précédente, **caractérisé en ce que**
le troisième dispositif basé sur la logique floue (300) présente une mémoire (219) dans laquelle des profils d'utilisation temporelle prédéfinis sont mis en mémoire, où le troisième dispositif basé sur la logique floue (300) est conçu pour reconnaître un profil d'utilisation prédéfini en réponse à la consommation totale d'énergie déterminée à des moments prédéfinis.

6. Système de régulation à logique floue selon l'une quelconque des revendications précédentes 2 à 5, dans lequel le premier dispositif basé sur la logique floue (100) est réalisé sous la forme d'un premier régulateur à logique floue (100), et le deuxième dispositif basé sur la logique floue (200) est réalisé sous la forme d'un deuxième régulateur à logique floue relié à la sortie du premier régulateur à logique floue (100).

7. Système de régulation à logique floue selon l'une quelconque des revendications précédentes 4 ou 5, dans lequel le premier dispositif basé sur la logique floue (100) est réalisé sous la forme d'un premier régulateur à logique floue (100), le deuxième dispositif basé sur la logique floue (200) est réalisé sous la forme d'un deuxième régulateur à logique floue (200) et le troisième dispositif basé sur la logique floue (300) est réalisé sous la forme d'un troisième régulateur à logique floue (300), où le deuxième régulateur à logique floue (200) est relié à la sortie du premier régulateur à logique floue (100) et à la sortie du troisième régulateur à logique floue (300).

8. Système de régulation à logique floue selon l'une quelconque des revendications précédentes 2 à 7, **caractérisé en ce que**
le premier dispositif basé sur la logique floue (100) est conçu pour déterminer la valeur de priorité pour chaque appareil électrique en fonction de sa consommation d'énergie actuelle et d'une grandeur de criticité associée.

9. Système de régulation à logique floue selon la revendication précédente, **caractérisé en ce que**
le premier dispositif basé sur la logique floue (100) est conçu pour déterminer pour chaque appareil électrique une grandeur de criticité en fonction d'une valeur d'activité spécifique à l'appareil, d'une valeur de contact spécifique à l'appareil et/ou d'une valeur de pertinence pour la sécurité spécifique à l'appareil.

10. Système de régulation à logique floue selon l'une quelconque des revendications précédentes 2 à 9, **caractérisé en ce que**
le deuxième dispositif basé sur la logique floue (200) est conçu pour déterminer la valeur de réglage pour chaque appareil électrique souhaité en fonction d'une grandeur de pertinence, de la consommation d'énergie actuelle, de la consommation totale d'énergie actuelle et de la valeur de priorité.

11. Système de régulation à logique floue selon la revendication précédente, **caractérisé en ce que**
le deuxième dispositif basé sur la logique floue (200) est conçu pour déterminer la grandeur de pertinence en fonction du temps actuel, d'une valeur d'activité spécifique à l'appareil et/ou d'une durée d'utilisation spécifique à l'appareil.
